# EUROPEAN PATENT SPECIFICATION

(11) **EP 4 550 299 B1**
(45) Date of publication and mention of the grant of the patent: **04.11.2026**
(21) Application number: 24210262.2
(22) Date of filing: 31.10.2024
(51) Int. Cl.: G09B 23/28

(54) **COMPACT LUNG SIMULATOR AND SYSTEM**
KOMPAKTER LUNGENSIMULATOR UND SYSTEM
SIMULATEUR PULMONAIRE COMPACT ET SYSTÈME

(30) Priority: 01.11.2023 US 202363595174 P
(43) Date of publication of application: 07.05.2025
(73) Proprietor: IngMar Medical, LLC, Pittsburgh, PA 15208 (US)
(72) Inventor: FREMBGEN, Stefan, Pittsburgh, 15224 (US); FIALHO, James, Glenshaw, 15116 (US); HUFF, Stephen, Pittsburgh, 15241 (US)
(74) Representative: Reddie & Grose LLP

(56) References cited:
- WO-A1-2013/143933
- WO-A1-2016/030393

## Description

### FIELD OF THE INVENTION

This invention relates to a compact computer-controlled mechanical device for the simulation of a lung, more particularly a compact computer-controlled servo lung for simulating lung function in a human manikin and a system for compensation of positive end expiratory pressure ("PEEP") for training on and testing of the operation of mechanical ventilators.

### BACKGROUND

Servo lungs are used to provide a simulated human lung analog for the purpose of training medical professionals to provide care. A servo lung follows a prescribed breathing pattern, be it the result of an active effort of a simulated patient or an external force on the servo lung, which is commonly positive pressure applied to the servo lung by a ventilator. The prior art can be broken down into two basic categories: simple devices typically contained in a mannequin which provide basic air inhale and exhale and more complex devices which simulate normal and abnormal lung conditions to permit detection, diagnosis, and/or treatment. Some of these more complex devices are "programmable" in that they have variable physiological characteristics which are controllable by an instructor or the like in the way of scenarios. Some such devices are not necessarily anthropomorphic but provide functionality in a utilitarian form.

One conventional servo lung, the ASL 5000^{®} breathing simulator offered by IngMar Medical^{®} (Pittsburgh, Pennsylvania), is an external and utilitarian system used in conjunction with a separate mannequin. The ASL 5000^{®} is based upon a patented system described in United States Patent No. 5,975,748 to East et al., which is now expired. The ASL 5000^{®} and other similar devices are too large to fit inside a human manikin and therefore are sold as external, stand-alone pieces in a simulation solution. These external devices may be connected directly to a ventilator, or may be integrated with a compatible manikin interconnected between the external device and the ventilator.

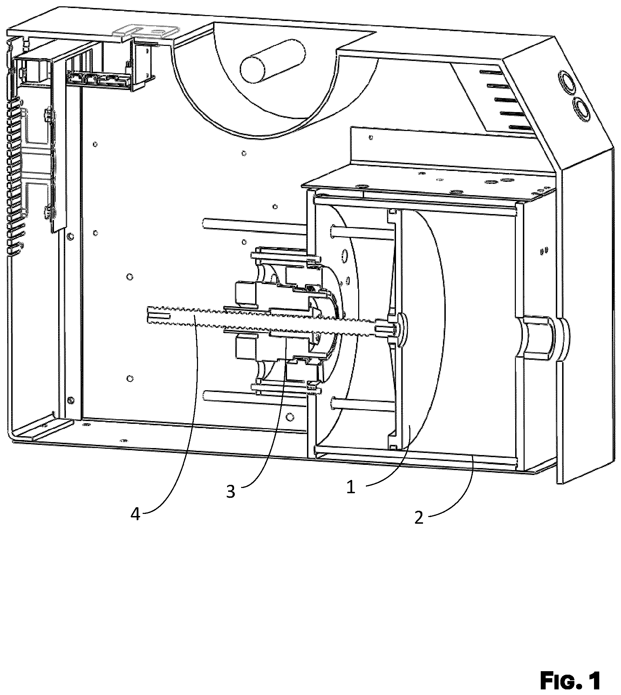

In operation, the ASL 5000^{®}, shown in FIG. 1, comprises a cylinder 1 containing a piston 2 which is sealed between its circumference and the cylinder 1. A ball screw 4 is threadably inserted within a ball nut 3 which rotates causing linear displacement of piston 2 within the cylinder 1. The unnumbered rods provide stability for the moving piston 2. As the piston 2 moves, the ball screw 4 and rods are displaced into the empty housing space, shown at the left of FIG. 1. This embodiment of a servo lung, however, is far too bulky for use within a manikin.

The alternative implementation of lung functionality that most manikin-based systems rely on is a bellows and spring mechanism which is unable to simulate physiological conditions such as non-linear response (volume versus pressure) and, significantly, spontaneous breathing. Gaumard^{®} (Miami, Florida) is a manufacturer which provides an anthropomorphic manikin, the HAL^{®} S5301, which has internalized controls and power sources such as those described in United States Patent No. 9,697,750 to Rodriguez et al. However, its lung simulation functions are quite limited.

Prior art devices are constrained from inclusion within manikin devices as there is limited space within the manikin. An effective servo lung design requires simulation of a baseline volume of air to be within the lung, representing the volume used to keep a patient's airways and lungs from collapsing during exhale. While prior art references, such as United States Patent No. 9,333,312 to Cardelius et al., consider this excess volume in its operation, referencing a separate ventilator or other external controls, minimizing this baseline volume to achieve a compact servo lung solution is an obstacle which has not been overcome by the prior art.

Patent document WO 2013/143933 A1 discusses a lung simulator for simulating ventilation of liquid filled lungs, adapted to be coupled to the airways of a manikin. The simulator comprises an enclosure, e.g., a cylinder, with a moveable member, e.g. a piston. A first end of the enclosure is adapted to be coupled to a mouth/nose opening of the manikin. A selectively adjustable valve is coupled to a second end of the enclosure. The moveable member is adapted to move relative to a ventilation volume.

What is missing in the art is a compact arrangement of a multi-functional servo lung which can fit inside a manikin to produce a realistic, anthropomorphic training environment.

### SUMMARY

The invention is defined by the attached claims. The present internal servo lung configuration comprises a selectively sealed chamber extending along a longitudinal axis, having a motor at a first end of the chamber and an air intake at a second, opposite end of the chamber. A threaded member extends from the motor to the opposite end of the chamber. One or more stability rods extend between the ends of the chamber, parallel to the threaded member. A first traveler, second traveler, and , piston are assembled along the threaded member. These self-lubricating plastic travelers are threaded to conform to the threading of the threaded member such that, when the motor rotates the threaded member about the longitudinal axis, the travelers and the piston between them translate along the longitudinal axis toward either end of the chamber as a unit. The piston extends radially outward from the assembly of travelers to the inner perimeter of the chamber, separating the chamber into two compartments: an ambient compartment at the end of the chamber having the motor and a pressurized compartment at the end of the chamber having the air intake. A biasing member is added to the assembly to surround the second traveler and is secured by a lockring attached to the second traveler so that the biasing member biases against the lockring and the piston. Other elements, such as an O-ring, grease, and/or formed seal and seal cover may be added to this device to seal between the pressurized and ambient compartments of the chamber.

An insertion portion of the first traveler is sized to pass through a central bore of the piston and fit within an internal receiver of the second traveler when both travelers are threaded onto the threaded member. An alignment feature on the insertion portion of the first traveler and an alignment feature on the internal receiver of the second traveler interact to prevent rotation of the travelers relative to one another. The alignment features are, in an exemplary embodiment, a recess in the first traveler and a protrusion from the second traveler which mechanically interact to obstruct relative rotation of the travelers.

In embodiments having an O-ring to seal between the pressurized and ambient compartments, an insertion portion of the first traveler is slightly undersized relative to the dimensions of the internal receiver to accommodate the O-ring. The O-ring sits partially within a groove provided in the insertion portion to provide stability.

In embodiments having grease to seal between the pressurized and ambient compartments, the insertion portion and internal receiver are similarly sized and seal the traveler assembly by tight tolerance of their respective surfaces. To lubricate between these close surfaces and help provide the seal between the surfaces, grease is injected into the area between the insertion portion and internal receiver of the travelers.

In embodiments having a formed seal and seal cover to seal between the pressurized and ambient compartments, the formed seal and seal cover are attached to the pressurized chamber side of the first traveler, creating a seal between the first traveler and the pressurized portion of the chamber. The formed seal has the external shape of a round washer with an internal shape contoured to the profile of the lead screw threads. The pressure of the formed seal against the threaded member may be adjusted to provide an optimal balance between the requirements of a system having limited friction and providing a sufficient seal against air passing between opposite sides of the piston.

The addition of one or more of the grease, O-ring, and the formed seal is prerequisite for both travelers to contribute to the sealing between the travelers and threaded member in those embodiments of the invention. These features may be used individually or in combination.

A first volume compensation method measures pressure, speed, and other useful characteristics of air within the device. Separately, an algorithm runs to determine the current breath phase, being either inspiration or expiration. Upon changing from expiration to inspiration, a configurable number of most recent airway pressure measurements, the averaging periods, are read from an airway pressure circular buffer. These values captured during the change from expiration to inspiration are averaged together and are considered the measured held volume level. The present system removes the constantly held volume and only keep the breaths that ride upon it by adjusting the baseline position of the piston over one or more breath iterations to expel the constantly held volume. By expelling this volume over multiple iterations, nearly normal breathing rhythms are maintained in the simulation while tidal volume potential of the device is increased.

A second volume compensation method manipulates compliance of the device to expel constantly held volume. Similar to the first volume compensation method, pressure, speed, and other useful characteristics of air within the device are measured. A series of piecewise functions that result in a somewhat sigmoid-shaped compliance curve ("NLC curve") are used to model the relationship between pressure and volume of the device. This method modifies the NLC curve by moving the starting point, where pressure and volume equal zero, along the pressure axis to result in zero volume at a non-zero pressure.

### DESCRIPTION OF THE DRAWINGS

FIG. 1 is a perspective cross-section view of a prior art device.
FIG. 2 is a cross-sectional elevation view of an embodiment of the compact simulated lung device described herein, showing the travelers and piston assembled on the threaded member within the chamber.
FIG. 3A is an exploded perspective view the device of FIG. 2 having the formed seal and seal cover.
FIG. 3B is an enlarged exploded perspective view the device of FIG. 3A.
FIG. 3C is an enlarged exploded perspective view the device of FIG. 3A
FIG. 4 is a perspective cross-section view of the device of FIG. 2 having the formed seal and seal cover.
FIG. 5 is a detail perspective cross section view of the device of FIG. 4, showing the traveler assembly accommodated within the end of the chamber having the motor.
FIG. 6A is a perspective view of the first nut half of the device of FIG. 2 without an O-ring.
FIG. 6B is a perspective view of a first nut half of the device of FIG. 6A.
FIG. 6C is a perspective view of the first nut half of the device of FIG. 2 having an O-ring.
FIG. 7 is a perspective view of the second nut half of the device of FIG. 2.
FIG. 8 is a perspective view of a piston of the device of FIG. 2.
FIG. 9 is a perspective view of a biasing member of the device of FIG. 2.
FIG. 10 is a perspective view of a lockring of the device of FIG. 2.
FIG. 11A is a perspective view of the first and second travelers, biasing member, and lockring assembled as shown in FIG. 2.
FIG. 11B is a perspective view of the first traveler, second traveler, biasing member, and lockring assembled as shown in FIG. 2.
FIG. 12A is a perspective view of the device of FIG. 4.
FIG. 12B is cross-sectional elevation view of the device of FIG. 4.
FIG. 13A is a perspective view of the assembly of FIG. 11A having a seal cover and formed seal attached to the first traveler.
FIG. 13B is a cross-sectional perspective view of the assembly of FIG. 13A, showing the internal threading of the first traveler, second traveler, and formed seal.
FIG. 14 is a perspective view of the seal cover of the device of FIG. 4.
FIG. 15A is a perspective view of the formed seal of the device of FIG. 4.
FIG. 15B is a cross-sectional perspective view of the formed seal of FIG. 15A.
FIG 15C is a cross-sectional elevation view of the formed seal of FIG. 15A.
FIG. 15D is a cross-sectional perspective view of the formed seal of FIG. 15A having an energizing spring.
FIG. 15E is a cross-sectional elevation view of the formed seal of FIG. 15D.
FIG. 16A is a cross-sectional perspective view of the device of FIG. 4, showing the threaded member adjusted such that the assembly of the travelers and piston are at the end of the chamber proximate to the air intake.
FIG. 16B is a cross-sectional perspective view of the device of FIG. 16A, showing the threaded member adjusted such that the assembly of the travelers and piston are at a midpoint of the chamber.
FIG. 16C is a cross-sectional perspective view of the device of FIG. 16B, showing the threaded member screw further adjusted such that the assembly of the travelers and piston are at the end of the chamber proximate to the motor.
FIG. 17 is a flow diagram showing the pathway of simulated breaths through the device and ventilator system during exhale; this pathway would be reversed for inhale.
FIG. 18 is a flow diagram showing interconnection between hardware in a manikin having an integrated servo lung.
FIG. 19 is a graph showing the operation of the first method of PEEP detection and calculation of the system described herein.
FIG. 20 is a graph showing the relationship between a detected PEEP value, the PEEP accumulator value, and the airway pressure (breath rhythm) of the first method of volume compensation described herein.
FIG. 21 is a graph showing the relationship between pressure and volume along an original non-linear compliance ("NLC") curve and a shifted NLC curve according to the second method of volume compensation described herein.

Like reference numerals refer to like parts throughout the several views of the drawings.

### DETAILED DESCRIPTION

### TRAVELER AND PISTON ARRANGEMENT

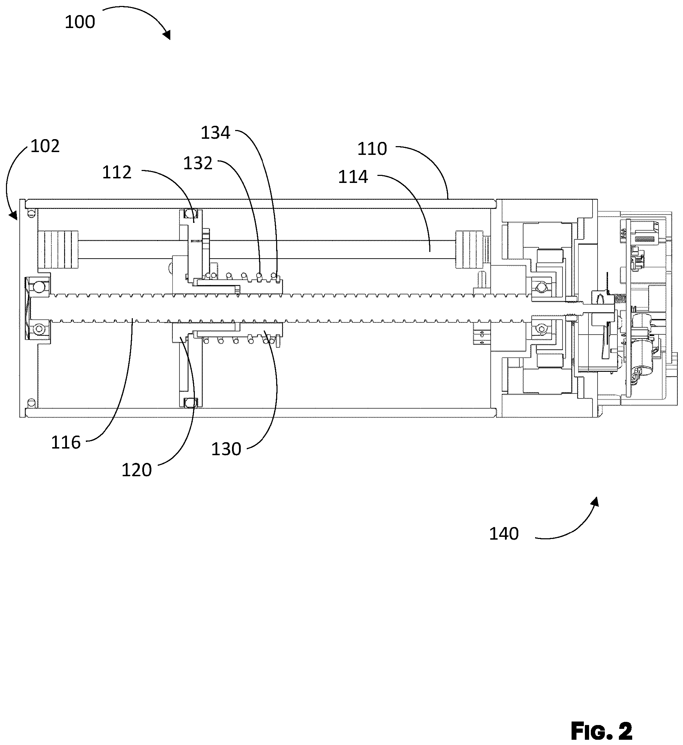

As shown in FIGs. 2-4 and as described in further detail herein, the present internal servo lung 100 configuration comprises a chamber 110 extending along a longitudinal axis 104, having a motor 140 at one end of the chamber 110 and an air intake 102 at an opposite end of the chamber 110. A threaded member 116 extends from the motor 140 to the opposite end of the chamber 110. In the exemplary embodiment shown and described herein, the threaded member 116 is a lead screw 116, but the threaded member 116 may be any structure suitable for the purposes described herein. One or more stability rods 114 extend between the ends of the chamber, parallel to the lead screw 116. A first traveler 120, piston 112, and second traveler 130 are assembled along the lead screw 116. These self-lubricating plastic travelers 120, 130 are threaded to conform to the threading of the lead screw 116 such that when the motor 140 rotates the lead screw 116 about the longitudinal axis 104 the travelers 120, 130 and the piston 112 between them move along the longitudinal axis 104 toward either end of the chamber 110. The first traveler 120 and second traveler 130, together, the travelers 120, 130, may be interchangeably referred to as the first nut half 120 and second nut half 130, together, the nut halves 120, 130, respectively. The travelers 120, 130 may be any structure suitable for the purposes described herein, without being limited to a nut or anti-backlash nut design. The piston 112 extends radially outward from the assembly of nut halves 120, 130 to the inner perimeter, or circumference, of the chamber 110, separating the chamber into two compartments: an ambient compartment at the end of the chamber 110 having the motor and a pressurized compartment at the end of the chamber 110 having the air intake 102. A biasing member 132, is added to the assembly to surround the second nut half 130 and is secured by a lockring 134 attached to the second nut half 130 so that the biasing member 132 biases against the lockring 134 and the piston 112. In the exemplary embodiment shown and described herein, the biasing member 132 is a spring 132, but the biasing member 132 may be any structure suitable for the purposes described herein. Other elements, such as an O-ring 124, grease, and/or formed seal 152 and seal cover 150 may be added to this device 100, as described in further detail herein, to seal between the pressurized and ambient compartments of the chamber 110.

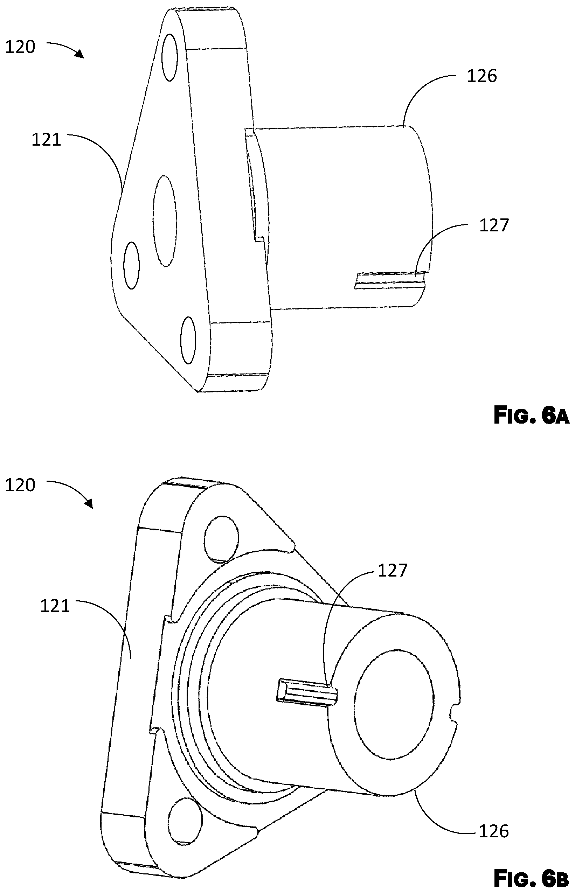

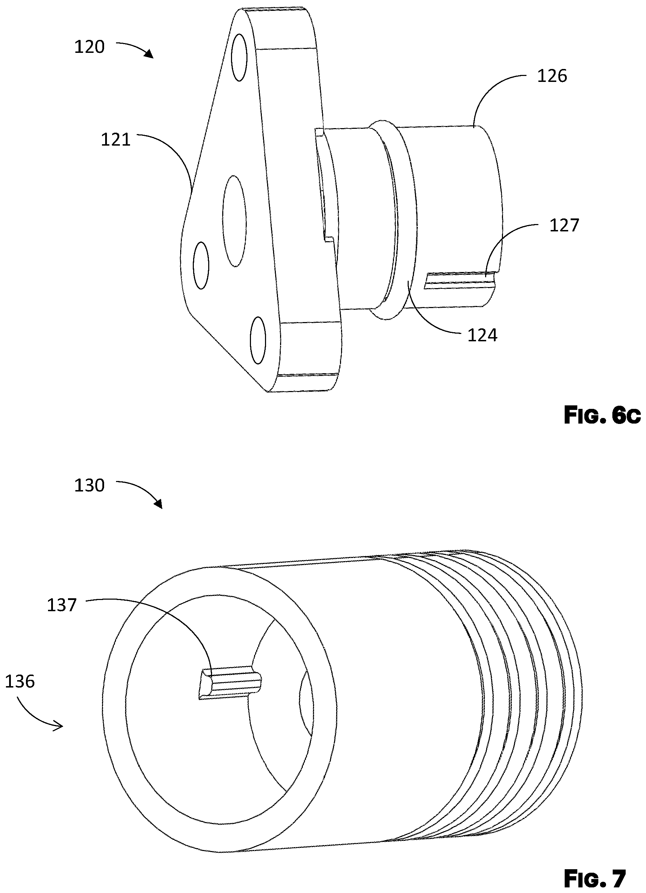

In order to create a lung analog that will fit into a training manikin, it is critical to minimize "overhead" length, that is, the length of the device 100 which is occupied by components other than the lung chamber 110 itself. The length of the device 100 should, to the greatest extent possible, be contributing to the longitudinal range of motion available for the piston 112 along the lead screw 116, that is, the area available to produce a simulated breath maximizing stroke length and thus displacement volume. This requires the piston 112 to travel on the lead screw 116 along its longitudinal axis 104 via a lead screw nut 120, 130 comprised of two halves, as shown in FIGs. 2-5, where one side of the lead screw nut, the first nut half shown in FIGs. 6A-6C, 120 is part of the pressurized compartment of the chamber 110 and the other side, the second nut half shown in FIG. 7, 130 is exposed to the ambient compartment of the chamber 110. This device 100 contrasts the physical arrangement and functionality of the prior art lead screw, nut, and piston shown in FIG. 1 which utilizes a nut affixed to one side of the chamber such that the rotation of the nut about the lead screw causes linear displacement of the lead screw and piston at the end thereof within a chamber, wherein the lead screw does not pass through the piston.

This compact configuration permits insertion of the device 100 into manikin. A challenge of this system, however, is that the lead screw 116 thread must be sealed against the difference in pressure between ambient compartment and the pressurized compartment of the chamber 110, which acts as the simulated lung. While the threaded nut halves 120, 130 and lead screw 116 configuration can never be completely leak free, the present device 100 aims to effectively reduce the leak to a level such that it becomes irrelevant for the purpose of creating a simulated lung for training in the use of ventilators. Mechanically, leaks may be reduced by the configuration of the plastic nut halves 120, 130 and lead screw 116 in a self-lubricating assembly, as described in greater detail below. This assembly is used to provide the best possible long-term seal, compared to a standard ball nut, and low noise. As this device 100 is inherently imperfect, the functionality of the device 100 may compensate for it, as described in greater detail below.

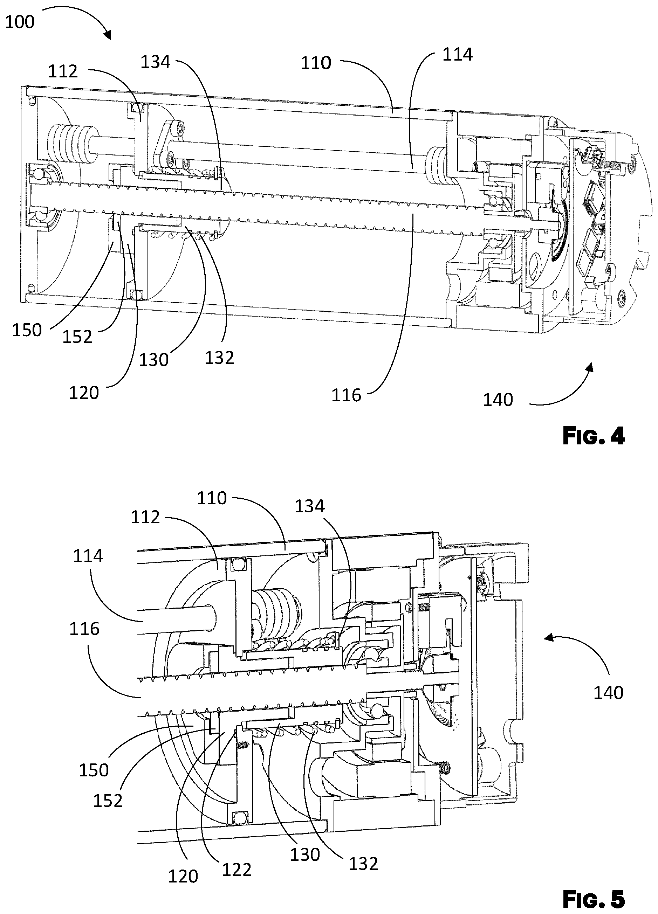

The present internal servo lung device 100 in part reduces its length by employing an arrangement where the second nut half 130 is accommodated into the motor 140 space, shown in FIG. 5, allowing for further displacement of the piston 112 within the chamber 110. The bearing arrangement of the direct drive brushless servo motor assembly 140 of the present device 100 may use a pair of angular contact bearings holding the lead screw 116 which firmly connect to the rotor and receive a defined preload by means of a wave compression spring located at one end. The rotary position encoder for controlling the motor 140 is also directly integrated into the motor's 140 stator space, again minimizing additional "overhead" length.

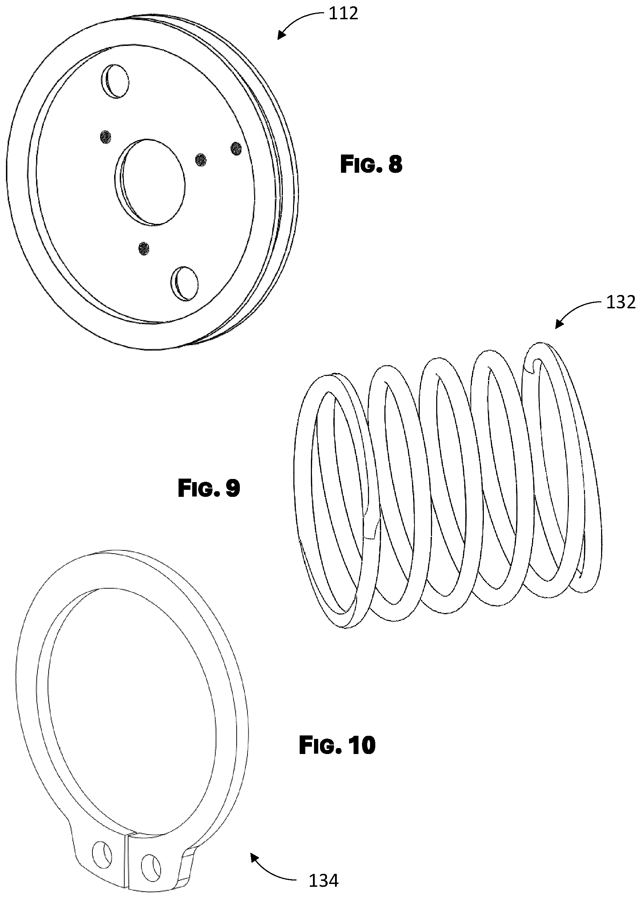

The chamber 110 is shown and described herein as a cylinder, but may be any shape suitable to functioning as servo lung and accommodating the other aspects of the device 100. The piston 112 is sized to conform to the inner circumference of the cylinder 110 and, as shown in FIG. 8, provides a central bore therethrough which accommodates the lead screw 116, nut halves 120, 130, and other sealing elements as described herein. The piston 112 may also provide additional bores to accommodate one or more stability rods 114 and screws associated with the nut halves 120, 130 or other attachments. The assembly of nut halves 120, 130 utilizes the spring 132 and lockring 134 shown in FIGs. 9 and 10. The piston 112 attaches to the first nut half 120. In some embodiments, this attachment is formed by screws threaded into the piston 112, in alternate embodiments this attachment may be formed by any other suitable means of attachment, such as adhesive or spring tension, which is capable of reliably affixing the first nut half 120 to the piston 112. Both nut halves 120, 130, are assembled on opposite sides of the piston 112 as described below and are together threaded onto the lead screw 116 within the cylinder 110. The lead screw 116 thread and internal threads of the nut halves 120, 130 are corresponding mating surfaces which are machined to conform to each other tightly.

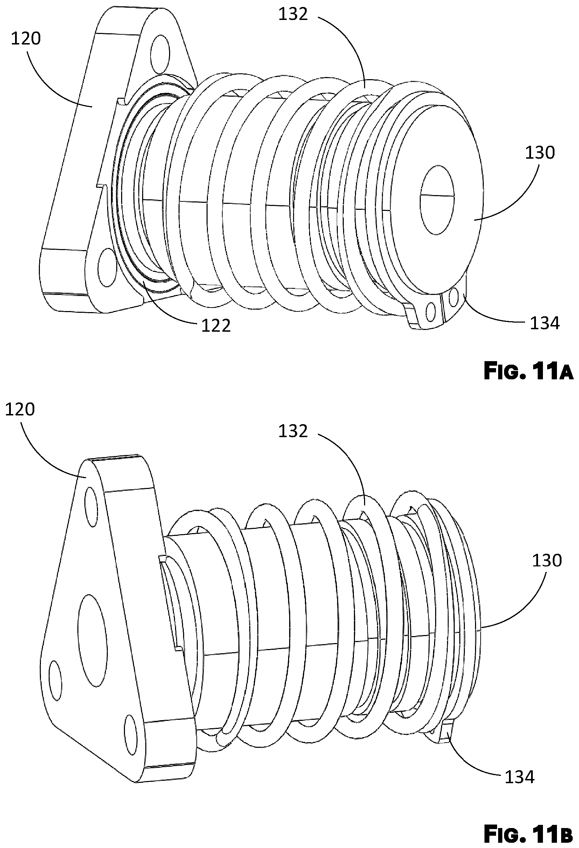

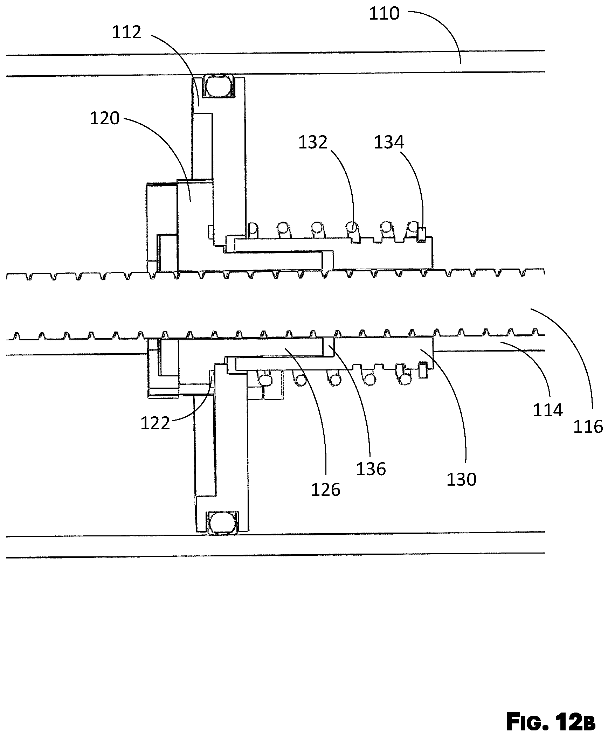

A compression spring 132 inserted between the two halves of the nut 120, 130 pushes the halves 120, 130 apart, biasing against the piston 112 to do so, as shown in FIGs. 11A-12B. Accordingly, the two halves of the nut 120, 130 are each compressed against the lead screw shaft 116 to minimize air leakage. In some embodiments of the invention, the two halves of the nut 120, 130 form a sealed entity, despite their ability to laterally move against each other to compensate for eventual wear of the threads of both the lead screw 116 and nut halves 120, 130. This seal is accomplished by a combination of the compression spring 132, a tight tolerance of surfaces of the lead screw 116 and nut halves 120, 130, and other sealing elements described herein.

In one embodiment of the invention, the addition of grease over the mating portions of the nut halves 120, 130 where the parts 116, 120, 130 slide over each other contributes to this seal. In alternate embodiments of the invention, and as described in further detail below, one or more O-ring seals 124 between the mating surfaces of the nut halves 120, 130 may contribute to the seal between the nut halves 120, 130. In another alternate embodiment, a formed seal 152 and seal cover 150 are attached to the pressurized side of the first nut half 120, creating a seal between the first nut half 120 and the pressurized portion of the cylinder 110. The addition of one or more of the grease, the one or more O-rings 124, and the formed seal 152 is prerequisite for both nut halves 120, 130 to contribute to the sealing between the nut halves 120, 130 and lead screw 116 in those embodiments of the invention.

A certain amount of incongruence between nut halves 120, 130 is unavoidable and will further develop over time with use of the device 100. Traditional backlash compensation may either turn the two parts of a lead screw nut against each other by means of a torsion spring or push them apart by means of a compression spring. In either case, traditional backlash compensation is not intended to create a seal. The present device 100 employs a stronger compression spring 132 that is intended to maintain each nut half 120, 130 pressed against one flank of the lead screw 116 thread under all load conditions while the other nut half 120, 130 is pressed against the opposite flank of the lead screw 116 thread. This improves the conforming of the two nut halves 120, 130 to the lead screw 116 as both halves contribute to the sealing of the lead screw 116 and nut 120, 130 mating surfaces and both nut halves 120, 130 can continue to maintain such sealing even after wear.

When the lead screw 116 is rotated by the motor assembly 140, the nut halves 120, 130 move linearly through the cylinder 110 through interaction of the threads on the lead screw 116 and nut halves 120, 130. The attachment of the first nut half 120 to the piston 112 causes linear displacement of piston 112 with the first nut half 120 along the longitudinal axis 104 within the cylinder 110 when the lead screw 116 is rotated by the motor 140. The piston 112 is sealed between its circumference and the cylinder 110. Additionally, as shown in FIG. 5, a piston sealing ring 122 may be located between the first nut half 120 and a central bore of the piston 112, where the first nut half 120 passes through the central bore of the piston 112 to seal between the piston 112 and first nut half 120. One or more rods 114 may add stability to the piston 112 and prevent its rotation.

### TRAVELER ASSEMBLY DETAIL

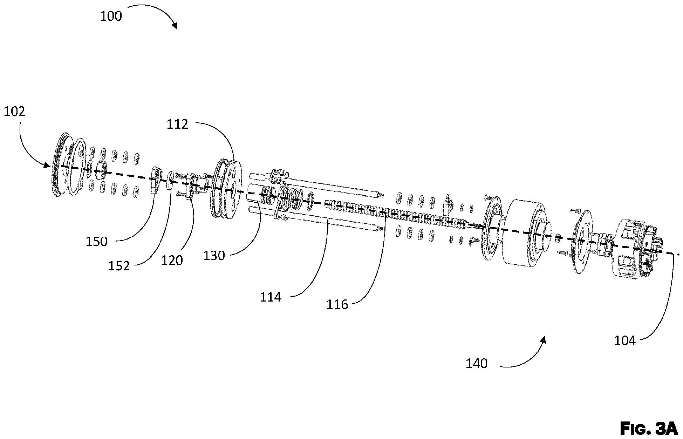

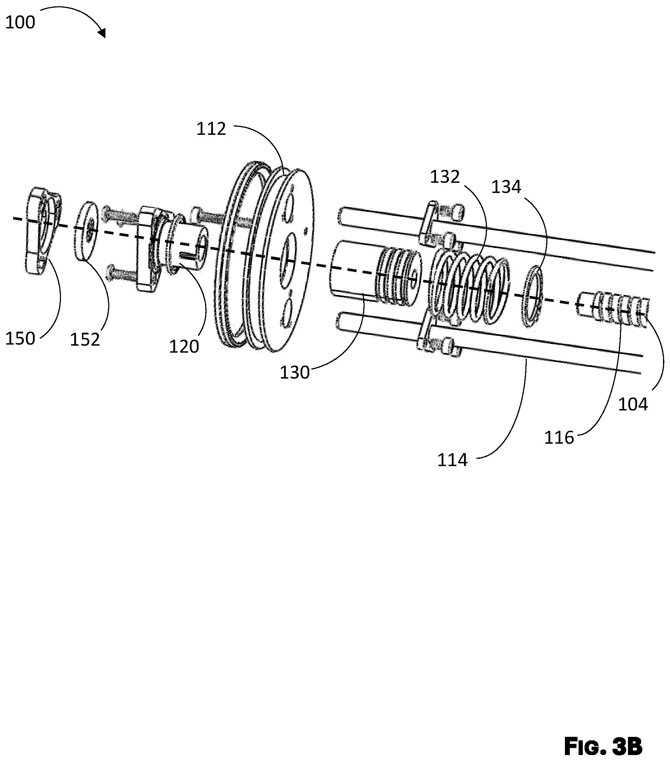

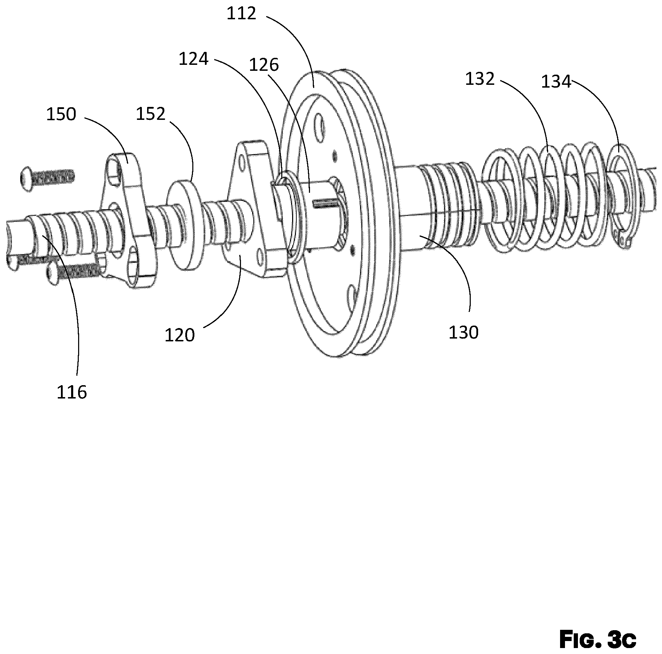

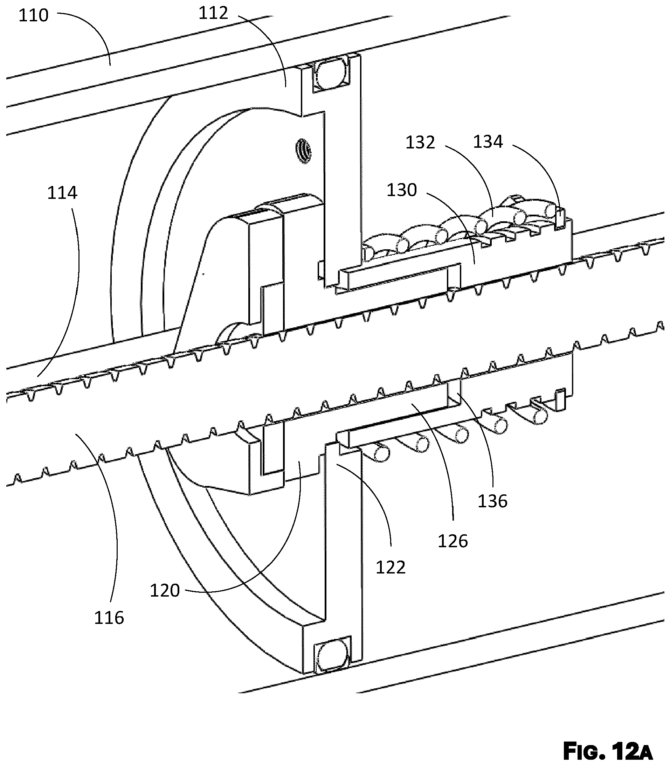

As shown in FIGs. 11A-12B, the nut assembly comprises a first nut half 120 and second nut half 130 which are pushed apart by means of a compression spring 132 between the two halves 120, 130. An insertion portion 126 of the first nut half 120 is sized to fit through the central bore of the piston 112. The flange 121 of the first nut half 120, opposite the insertion portion 126, attaches to the piston 112 and seals the cylinder 110 between the piston 112 and first nut half 120 by the piston sealing ring 122. The insertion portion 126 of the first nut half 120 extends through the central bore of the piston 112 and is sized to fit within an internal receiver 136 of the second nut half 130, as shown in FIGs. 8-10, when both halves 120, 130 are threaded onto the lead screw 116. As shown in FIGs. 6A-7, an alignment feature 127 on the insertion portion 126 of the first nut half 120 and an alignment feature 137 of the internal receiver 136 of the second nut half 130 interact to prevent rotation of the nut halves 120, 130 relative to one another. As shown, the alignment features 127, 137 consist of a recess 127 in the first nut half 120 and a protrusion 137 from the second nut half 130 which mechanically interact to obstruct relative rotation of the nut halves 120, 130. However, alternate methods of preserving alignment of nut halves are known in the art and may be applied. In some embodiments, shown in FIGs 3A-3C and 6C, the insertion portion 126 may be slightly undersized relative to the dimensions of the internal receiver 136 to accommodate a sealing O-ring 124. The insertion portion 126 may further feature a groove therein to partially accommodate the O-ring 124 and provide stability. In embodiments having the O-ring 124, the O-ring may be elastomeric and provides a resilient seal between the first and second nut halves 120, 130, allowing for movement of the nut halves 120, 130 with respect to one another while maintaining a seal between compartments of the cylinder 110. In other embodiments, shown in FIGs. 2, 4-6B, and 12A-12B, the insertion portion 126 and internal receiver 136 are similarly sized and seal the nut assembly 120, 130 by tight tolerance of their respective surfaces. To lubricate between these close surfaces, grease is injected into the area between the insertion portion 126 and internal receiver 136 of the nut halves 120, 130.

The compression spring 132, shown in FIGs. 2-5, 9, 11A-12B, and 13A-13B, biases the nut halves against each other and the piston. Traditionally, such springs have been used for backlash compensation, which is also a benefit here. At one end, the compression spring 132 biases against the lockring 134 attached to the second nut half 130. This lockring 134 may be inserted into grooves longitudinally spaced along the second nut half 130, shown in FIG. 7 such that the spring 132 position and compression in the present device 100 is adjustable. In alternate embodiments, the lockring may be an integral extension of the second nut half 130, requiring the assembly of the device 100, particularly the nut halves 120, 130 and piston 112 to be performed under spring load. At an opposite end of the spring 132, the spring 132 biases against the piston 112 and/or the first nut half 120, the piston 112 and first nut half 120 being attached to one another such that spring force against one element is transferred to the other element.

In alternate embodiments, any spring of suitable strength may be used to similarly cause compression or expansion of the internal threading of the nut halves 120, 130 against opposite flanks of the lead screw 116, maintaining the sealing effect of the arrangement.

This device 100 requires that the two nut halves 120, 130 are sealed against each other. The present nut assembly 120, 130 is able to form a sealed entity, despite each nut half's 120, 130 ability to longitudinally move away from the other to compensate for eventual wear of the threads of the lead screw 116 and/or internal threading of the nut halves 120, 130. The benefit of the present device 100 is both a high degree of stability against "yaw" of the nut assembly 120, 130 on the lead screw 116 as well as adding the secondary compression force on opposite sides of the lead screw 116 and nut assembly 120, 130 threads, providing the seal. Tight tolerances between parts 116, 120, 130 in conjunction with added grease over the mating surfaces of the parts 120, 130 where they slide over each other aid in formation of a seal. Inevitable imperfections, or tolerances, in the machined or 3D-printed plastic components are, as a result of this design, compensated.

This seal can be achieved in several ways: (a) by employing one, two, or more O-rings 124 as a seal between the insertion portion 126 and internal receiver 136 of the nut halves 120, 130, (b) by tight tolerance of the insertion portion 126 and internal receiver 136 of the nut halves 120, 130, (c) by injecting additional grease into the area between the insertion portion 126 and internal receiver 136 of the nut halves 120, 130, (d) by attaching a seal cover 150 and formed seal 152 to the first nut half 120, or (e) by a combination of (a), (b), (c), and/or (d). Each of these methods will retain the ability of the two nut halves 120, 130 to move longitudinally against each other and to therefore to adjust their position to compensate for wear of the lead screw 116 and nut half 120, 130 surfaces.

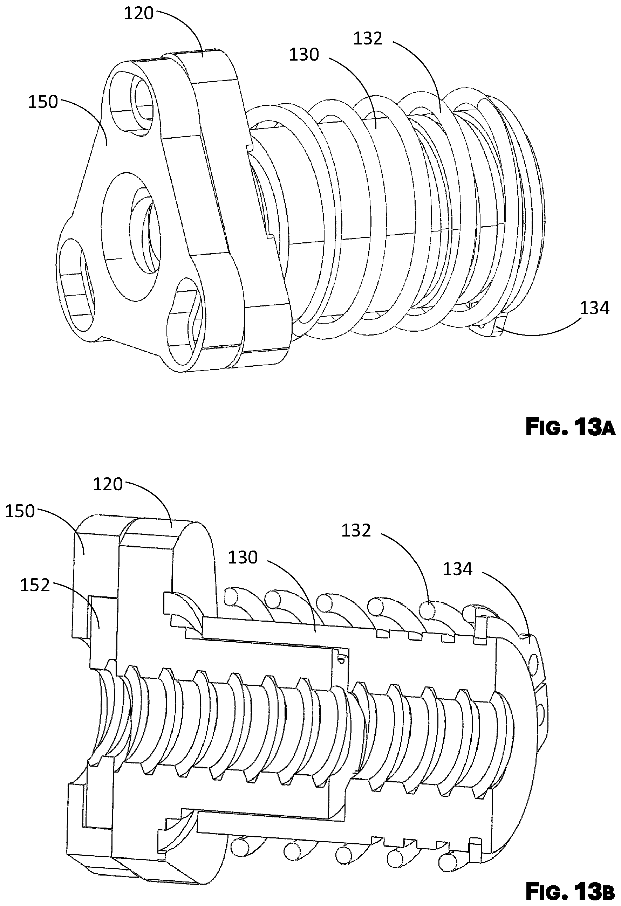

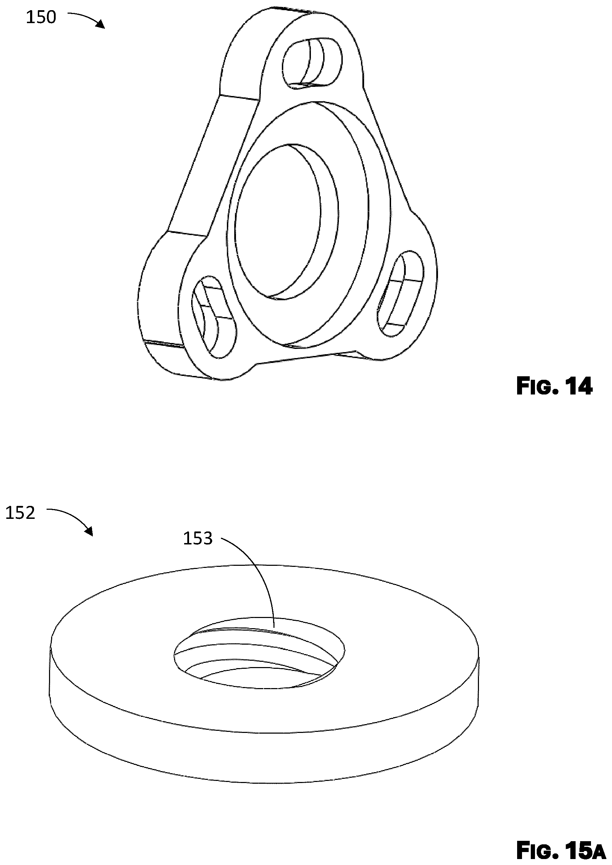

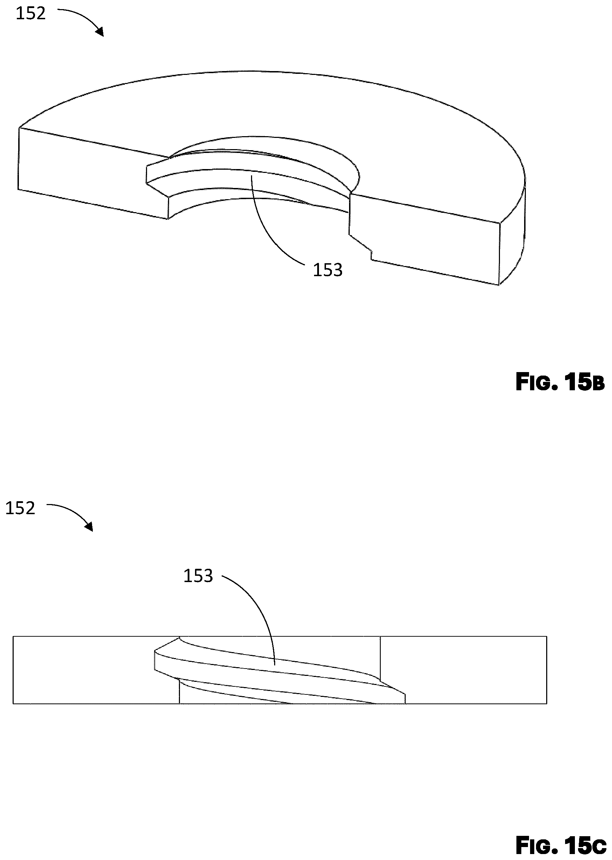

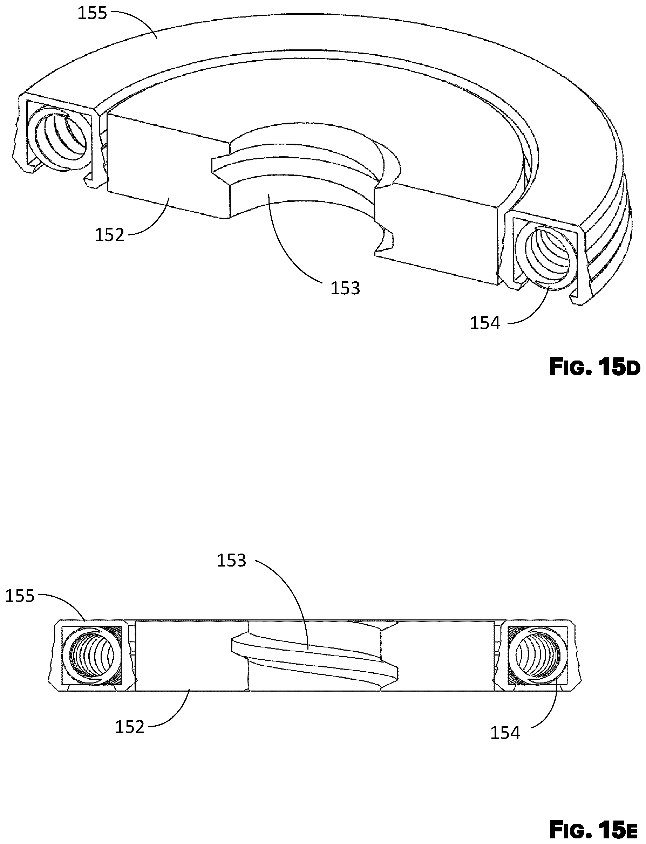

**In** the embodiment of the device 100 having the formed seal 152, the formed seal 152 and seal cover 150 are added to the first nut half 120 on the flange 121 opposite the piston 112, which, as shown in FIGs. 13A-14 is triangular but may be of any suitable geometry. This addition creates a seal between the first nut half 120 and the pressurized portion of the cylinder 110. The seal cover 150 and formed seal 152 may seal the device 100 independently from or in combination with the grease and/or the O-ring 124. The formed seal is composed of thermoplastic polyurethane or another suitable elastomeric material. The formed seal 152 is affixed to the first nut half 120 by means of a seal cover 150 with an optional internal elastomeric sealing ring interposed between the seal cover 150 and first nut half 120. **In** an exemplary embodiment, as shown in FIGs. 15A-15C, the formed seal 152 has the external shape of a round washer with an internal shape 153 contoured to the profile of the lead screw 116 threads, as shown in FIGs. 15A-15C. **In** addition to providing the seal between opposite sides of the piston 112, this contour 153 prevents contaminants from the lead screw 116 threads from entering the nut assembly 120, 130 and, by doing so, prevents wear on the device 100. With this assembly, the formed seal 152 may be added or exchanged easily without full disassembly of the device 100, aiding in routine maintenance.

The pressure of the formed seal 152 against the lead screw 116 threads may be adjusted to provide an optimal balance between the requirements of a system having limited friction and providing a sufficient seal against air passing between opposite sides of the piston 112. **In an** exemplary embodiment, this adjustment is achieved by the contour 153 being dimensioned to lightly pressure the flexible formed seal 152 material when installed.

**In** an alternate embodiment, the pressure of the seal cover 150 and formed seal 152 system may be adjusted by rotating the seal cover 150 about the longitudinal axis 104. When the seal cover 150 is affixed to the formed seal 152 on the flange 121, the seal cover 150 and formed seal 152 move as a singular piece by frictional interaction of their respective surfaces. Accordingly, rotation of the seal cover 150 rotates the formed seal 152 and adjusts the contour 152 with respect to the lead screw 116. This adjustment sets the compression of the formed seal 152 against the lead screw 116 threads and against the first nut half 120 to the desired amount, resulting in a more or less tight contact of the formed seal 152 against the flanks of the lead screw 116 threads. The rotational movement of the seal cover 150 required for significant change in pressure of the contour 152 against the lead screw 116 is relatively small, being 15° or less. For this adjustability, the seal cover 150 features mounting slots aligned with mounting holes of the first nut half 120 flange 121, the mounting slots are of sufficient width to allow for the necessary rotation of the seal cover 150 with respect to the first nut half 120.

In an exemplary embodiment, a 15° range for turning within the mounting slots is sufficient to adjust the formed seal 152 compression. The lead screw 116 threading may be configured such that a 3° rotation would provide 0.1 mm compression of the formed seal 152 along the lead screw 116. Maximum rotation of the seal cover 150 by 15° may provide 0.5 mm of displacement.

In an alternate embodiment shown in FIGs. 15D-15E, the formed seal 152 is a spring-energized seal. The spring-energized seal 152 comprises an energized spring 154 encased in a jacket 155. As in other embodiments, the jacket 155 maintains the external shape of a round washer with an internal shape 153 contoured to the profile of the lead screw 116 threads. The inner spring is configured to surround contoured internal shape 153 of the seal 152 and provide compression at the root of the lead screw 116 threads. The energizing spring 154 can be of circular, cylindrical coil shape, as indicated in FIG. 15D, or take the form of an O-ring inside the jacket 155. As the formed seal 152 becomes deformed, irregular, or worn, the inner spring 154 provides pressure on the internal helical shape 153 of the seal 152 against the lead screw 116 and therefore maintains a seal, compensating for these deficiencies in other materials of the device 100.

Additionally, the formed seal 152 separates the function of sealing against air passing through the interface between the nut assembly 120, 130 and lead screw 116 from the mechanical anti-backlash support function that a moving lead nut is primarily designed for. This separation of function allows for more generous tolerances in manufacturing the nut assembly 120, 130 components, consistent with tolerances customary for manufacturing the plastic lead nuts, without affecting the sealing performance of the device 100.

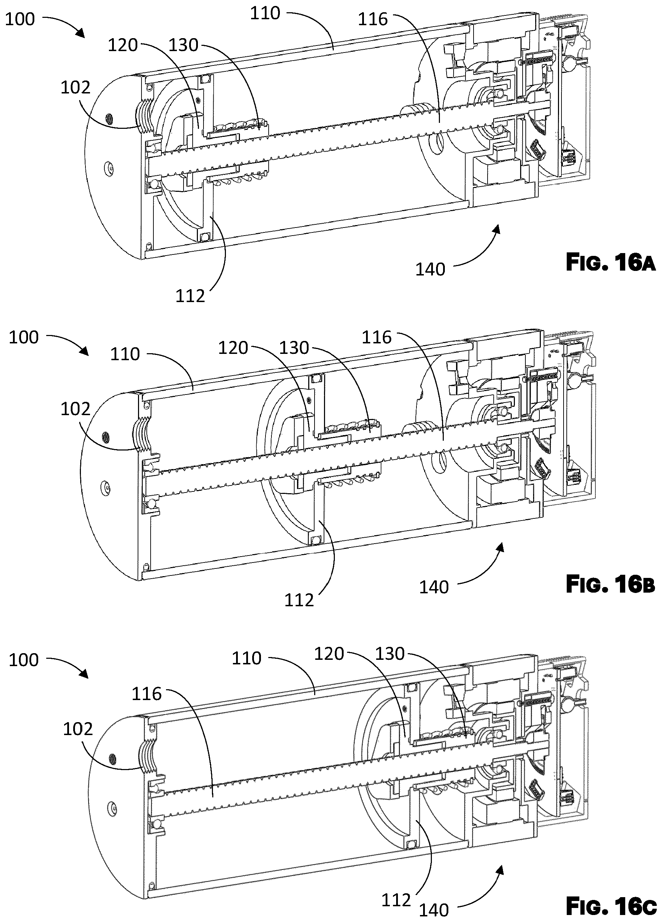

In operation, the device 100 is programmed to move the piston 112 along the lead screw 116, intaking and expelling air through the air intake 102 to simulate inspiration and expiration, respectively, of a patient's lung. This movement of the piston 112 along the lead screw 116, from one end of the cylinder 110 to the other is shown in FIGs. 16A-16C. FIG 16A shows the piston 112 located proximate to the air intake 102, minimizing the pressurized compartment of the cylinder 110. From this position, the piston 112 can be moved toward the motor 140 to expand the pressurized compartment of the cylinder 110 and draw air into the cylinder 110 through the air intake 102. The motor 140 is actuated to rotate the lead screw 116 about the longitudinal axis 104. The rotation of the lead screw 116 threads interacts with the threading of the first nut half 120, second nut half 130, and, in embodiments having a formed seal 152, the formed seal 152 to move these elements along the lead screw. The piston 112 is also moved through the cylinder 110 by its attachment to the first nut half 120, resulting in the position shown in FIG. 16B. Further actuation of the motor 140 continues to move the piston 112 toward the motor 140, pulling more air into the cylinder 110 through the air intake 102. In the position having the piston 112 closest to the motor 140, as shown in FIG. 16C, the pressurized compartment of the cylinder 110 is maximized. These operations may be reversed by rotating the lead screw 116 in the opposite direction, moving the piston 112 from the end of the cylinder 110 proximate to the motor 140, as shown in FIG. 16C, toward the end having the air intake 102, as shown in FIG. 16A.

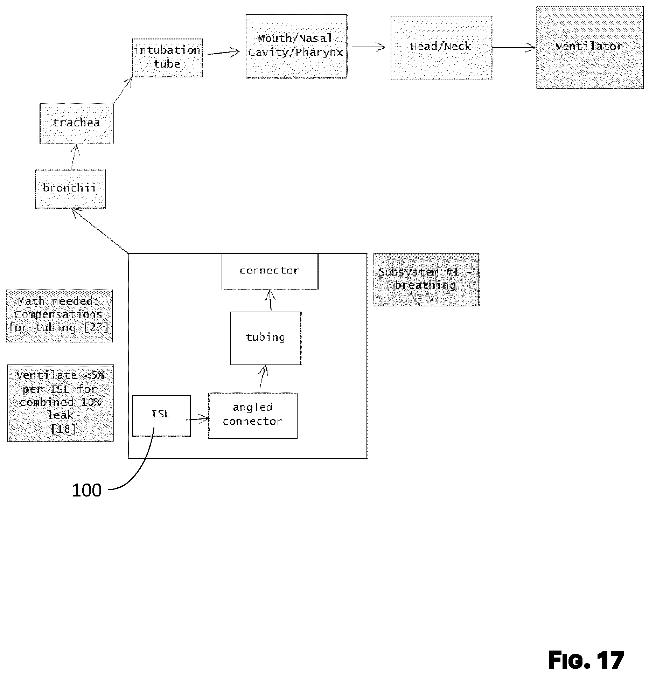

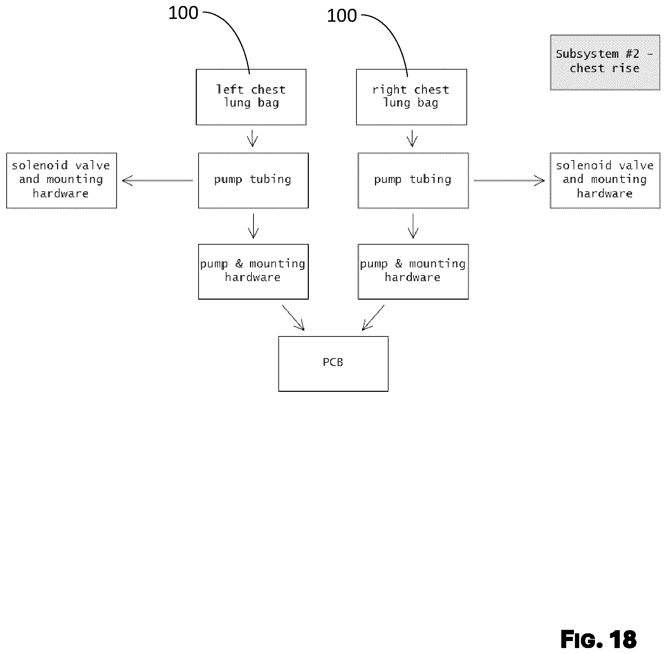

One embodiment of the device 100 employs just one cylinder 110 which is able to respond as a two-compartment model as shown in the prior art. An example of this is shown in FIG. 17, where a single device 100 attaches from the air intake 102 to a series of connectors passing air through the anatomy of a manikin to a ventilator attached to the manikin, integrating into a manikin's simulation solution, responding to the operation of the ventilator, and simulating the breathing of a patient. In alternate embodiments, a system may consist of two devices 100 which may use electronics directly integrated into each device 100 such that each device 100 may selectively be actuated to serve as a primary or secondary simulated lung component, thus creating a true physical dual-component lung analog through modification of the device's 100 onboard motor 140 settings without modification to the physical device 100. In alternate embodiments, a plurality of devices 100 may be of varying dimensions and placed throughout different parts of a manikin body. This plurality of devices 100 may selectively be actuated to serve as independent lung components, each of such devices 100 having its own onboard motor 140 and controls. Alternatively, the motor 140 of each of the plurality of devices 100 may be actuated in unison through common controls to effectively function as one larger device 100. In further embodiments, such as that shown in FIG. 18, two devices 100 are integrated into a manikin, which may be independently controlled, and contribute to a chest rise subsystem of the manikin.

### VOLUME COMPENSATION

Associated with the challenge of placing such an internal lung simulator 100 inside of a manikin is the restriction of volume of the device 100 to just the amount needed for providing realistic tidal volumes for different possible patient breath patterns. A positive end-expiratory pressure ("PEEP") is often applied by mechanical ventilators that would require additional space in the cylinder of a similar servo lung, representing the volume used to keep a patient's airways and lungs from collapsing during exhale. An important aspect of this device 100, therefore, is the ability to "hold PEEP," without compromising the ability to perform the necessary tidal volumes for each breath. The systems and methods of PEEP compensation described herein, in alternate embodiments, may equally apply to compensation for excess volume when the simulator is connected to continuous positive airway pressure ("CPAP") devices. These methods of PEEP compensation are used in combination with the device 100 described herein to form a system 101. The terms PEEP compensation, CPAP compensation, and volume compensation are used interchangeably herein.

Generally, to "hold PEEP" without requiring additional space in the cylinder 110, the device 100 may employ a PEEP compensation system 101 which adjusts the baseline position of the piston 112 within the cylinder 110 based on the PEEP exerted by the ventilator, detected by hardware within the device 100 and/or the manikin. This may occur in just one subsequent breath or may be done gradually over several breath cycles.

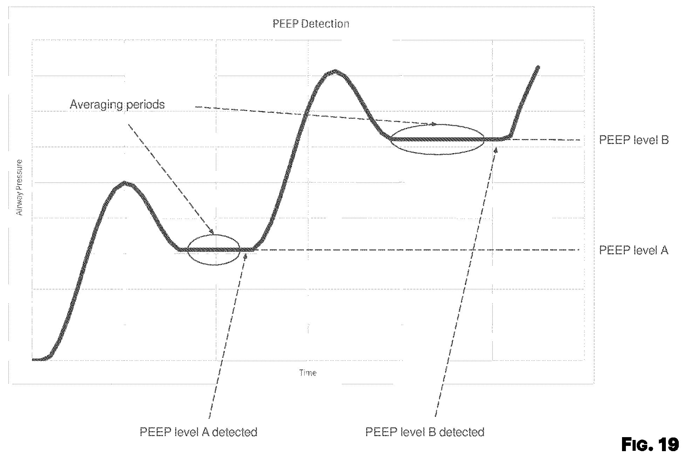

Monitoring hardware within the device 100 and/or the manikin provides feedback to the system 101 and communicates the pressure, speed, and other useful characteristics of air within the device 100 and/or the manikin. This hardware may be placed within the device 100 or the different lung analog components shown in FIGs. 13-14. Specifically, the PEEP exerted by the ventilator is detected through airway pressure detectors. As shown in FIG. 19, throughout each iteration of a given simulation, hardware within the device 100 and/or the manikin measures the airway pressure.

Pressure inside the cylinder 110 is calculated from the current volume and compliance. Compliance is defined as the relationship between changes in pressure in an enclosed space, here, the cylinder 110, and the change in volume of gas contained within. In most lung models, this is a simple relationship governed by the following formula: $C = \frac{\partial V}{\partial P}$ (1) Where ∂ represents change, C is compliance, P is pressure, and V is volume, each of which are usually expressed in mL/cmH2O, cmH2O, and mL, respectively.

### FIRST METHOD OF VOLUME COMPENSATION

In a first method of volume compensation, recent measurements of airway pressure are added to a circular buffer of configurable length. Separately, an algorithm runs to determine the current breath phase, being either inspiration or expiration. Upon changing from expiration to inspiration, a configurable number of most recent airway pressure measurements, the averaging periods, are read from the airway pressure circular buffer. These values captured during the change from expiration to inspiration are averaged together and are considered the measured PEEP level. This measured PEEP level may be detected multiple times in a given simulation, as shown in FIG. 19, where a PEEP level A was detected following one expiration and a PEEP level B was detected following a subsequent expiration.

In lung models, a difference in pressure within the compartments of the model and the externally applied pressure drives a change in volumes inside the compartments until the pressures are equal (referred to as the "Equation of Motion"). If the starting pressure in the lungs is zero and a constant pressure is applied externally (functionally equivalent to PEEP), a constant volume will be in the compartments at steady state. The following equation applies: $V = C ∗ \left(P-PEEP Accumulator\right)$ (2) Where V is the lung volume at steady state, C is lung compliance, and P is airway pressure. Any applied breaths from a ventilator ride on top of this constant pressure. In a volume-limited scenario such as the present device 100, removal of this constantly held volume to save space is desirable. The present volume compensation system 101 seeks to remove the constantly held volume and only keep the breaths that ride upon it. To accomplish this, the baseline position of the piston 112 is adjusted as a function of a PEEP accumulator variable over one or more breath iterations to expel the constantly held volume. By expelling this volume over multiple iterations, nearly normal breathing rhythms are maintained in the simulation while tidal flow volume potential of the device 100 is increased.

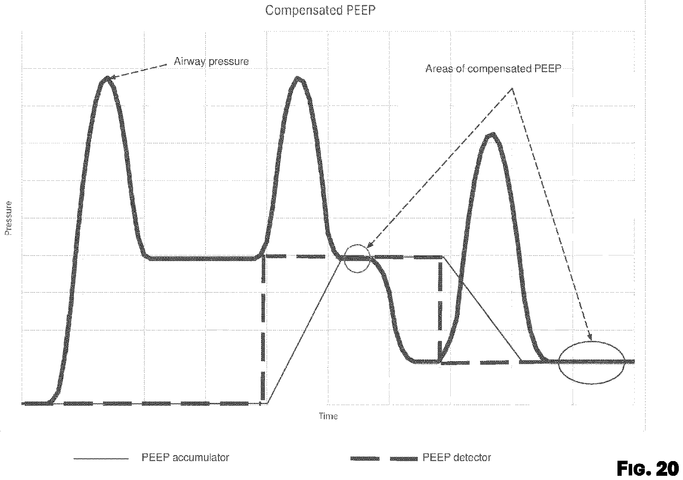

As shown in FIG. 20, the PEEP accumulator variable is initialized to zero at the beginning of a given simulation. If, during a simulation, the measured PEEP level detected, as described above, differs from the PEEP accumulator's value by a configurable amount, the PEEP accumulator is linearly adjusted over a configurable number of iterations to rise/fall to the value of the measured PEEP. This functionally causes the constant component of the externally applied pressure to be canceled out, leaving only the breaths that ride on top it, and thus, eliminating the constant component of the volume in the chamber 110.

Because the value in the PEEP accumulator is modified slowly, responses to a change in PEEP are not instantaneous. This has the advantage of not disturbing the Equation of Motion by creating exceedingly high flows at the expense of one or two breaths. The slow action of the PEEP accumulator allows the volume in the model to settle gently, arriving at a net zero point, where the detected PEEP and PEEP accumulator value are equal, regardless of the value of externally applied PEEP.

### SECOND METHOD OF VOLUME COMPENSATION

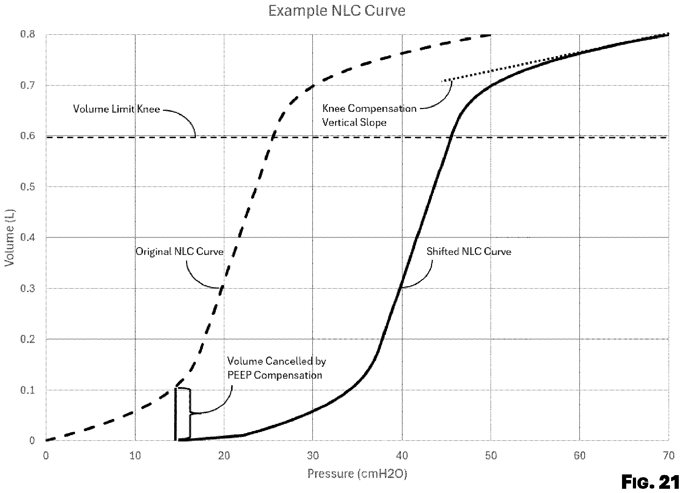

In a second method of volume compensation, the compliance of the lung model is manipulated in such a way that the resulting relationship between pressure of air pushed into the servo lung and output volume from the servo lung, as mapped on a non-linear compliance ("NLC") curve, is shifted on the pressure axis of the NLC curve and therefore cancels out any detected PEEP. An example of this is shown at FIG. 21, where an original NLC curve is shifted along the pressure axis to become a shifted NLC curve. In the example shown at FIG. 21, the NLC curve has a volume compensation of approximately 0.1 L. Accordingly, if the airway pressure is less than or equal to 15 cmH2O, there is no resultant volume, thus the volume contributed by this PEEP is cancelled. This second method of volume compensation can be used not only for compensating PEEP or CPAP imposed by a ventilator, but also for compensating what is known as "Auto PEEP."

The term "Auto PEEP" refers to air trapped inside of a patient, and by extension the servo lung 100, at the point in time when a new breath begins. Auto PEEP is caused by a high resistance in a simulated or physical patient model between the cylinder 110 and the mouth of the manikin (or, as applicable, the proximal end of the endotracheal tube) restricting the rate at which air can flow out of the cylinder 110. If the resistance is sufficiently high, flow will be limited enough that not all air can be expelled before more air is introduced at the next breath. This poses issues for the present device 100 similar to those described above that are caused by a ventilator applying PEEP or CPAP, causing idle air volume to be maintained in the cylinder 110.

This second method of volume compensation may be used in combination with the embodiments of the device 100 described above having a single cylinder 110 or multiple independently controllable cylinders 110. This method may be applied to any plurality of devices 100, whether independently controlled or sharing common controls. A non-limiting, illustrative example having two cylinders 110 may simulate different lung conditions associated with different conditions of a left and right lung or different regions of a diseased lung. In this configuration, this second method of PEEP compensation is applied in mostly the same fashion as the first method, including the use of monitoring hardware in different regions of the device 100, described above. In this example, instead of simply tracking the central airway pressure at the end of a breath, two instances of the PEEP detector and accumulator are implemented, one for each of the two cylinders 110 to monitor the volume in each lung compartment. In alternate embodiments, a plurality of PEEP detectors and accumulators may be implemented to match the number of cylinders 110 used. This modification allows for independent cancellation of volume due to PEEP applied by a ventilator and Auto PEEP.

This second method offers the additional advantage of allowing independent volume cancellation for each of a plurality of cylinders 110. The previous method may be limited in its application to multi-cylinder 110 systems in that it subtracts the detected PEEP from the airway pressure, which affects all cylinders 110 equally. This may pose a significant volume limitation when modeling heterogeneous disease states between a patient's lungs or lung regions.

The compliance calculation as in Equation 1, with a value of C considered constant for the applicable range of volumes and pressures, is sufficient for many disease models, but complex models such as those using this second method may require a more complex relationship between pressure and volume. This may be achieved through a series of piecewise functions that result in a somewhat sigmoid-shaped compliance curve, similar to the NLC curve shown in FIG. 21. The illustrated NLC curve shows that at high levels of pressure, the resultant change in volume per unit pressure gradually diminishes. This NLC curve is a more realistic representation of actual human physiology and, as such, is utilized in this second method. Volume compensation with the NLC curve is achieved by modifying the starting point, where pressure and volume equal zero, to result in zero volume at a non-zero pressure. Effectively, the NLC curve shown in FIG. 21 is shifted to the right from an original starting point of 0 cmH2O along the pressure axis.

Instead of subtracting this detected PEEP pressure from the measured airway pressure, as described in the first method, the NLC curve is shifted to the right along the pressure axis by the detected PEEP pressure. This results in zero volume at a non-zero pressure, achieving the desired volume cancellation and allowing the device to "hold PEEP" without loss of available tidal volume.

Several parameters are used to tune the performance of this second, NLC curve volume compensation method:
(1) Volume Limit: A calculated quantity representing the maximum volume the pressurized compartment of the device 100 cylinder 110 is capable of containing.
(2) Volume Limit Knee Percentage: The percentage of the Volume Limit at which the existing NLC curve will be truncated and a new section added to limit the volume represented on the NLC curve, referred to as the Volume Limit Knee. An example of this Volume Limit Knee is shown on FIG. 21. At the volume represented by the dashed line the new section begins and asymptotically approaches Volume Limit as the pressure increases. At the Volume Limit Knee, the derivative of the new section is set to match the derivative of the existing curve to ensure a smooth transition. This parameter importantly represents a volume in the mechanical device 100, not in the simulated lung model. A user could define the existing NLC curve to go beyond the mechanical limits of the device 100. The Volume Limit Knee Percentage sets an override for the user's NLC curve past the PEEP Volume Limit Knee, maintaining the NLC curve within the mechanical limits of the device 100.
(3) Knee Compensation Vertical Slope: A slope defining the NLC curve at volumes greater than the Volume Limit Knee which is determined by the reciprocal of a large number that approximates infinite slope in any particular NLC curve such that there is not a significant change in volume as the pressure increases beyond the Volume Limit Knee. This determines how quickly the NLC curve approaches a volume asymptote. An example of this slope is shown on FIG. 21. Generally, the slope will be sufficient to not reach the Volume Limit regardless of how much pressure is applied to the device 100. The Knee Compensation Vertical Slope needed for this function ultimately depends on the maximum pressure measurable by the device 100. Conversely, the Knee Compensation Vertical Slope should not be set such that the slope is essentially zero to avoid alarm in the ventilator attached to the device 100. If a standard ventilator applies pressure to the device 100 and sees almost no volume change, it could alarm indicating an occlusion of the manikin tubing. The Knee Compensation Vertical Slope needs to be tuned to balance safety margin of the piston 112 possibly hitting the end stop within the chamber 110 and the ventilator not alarming.
(4) Negative Restore Volume: When volume compensation is applied, this value will be reset to zero and will be flagged for reevaluation when the post-compensation volume goes below this zero. This prevents the lung model from directing the device 100 to "exhale" a volume that the volume compensation system 101 has already expelled from the chamber 110. For example, the system 101, according to the methods described herein, has compensated for 0.1 L of excess volume in a chamber 110. If the pressure is removed from the chamber 110 and the piston 112 is instructed to move to a zero-volume position, that position would be beyond the limits of the chamber 110, as, according to the systems attached to the device 100, a fully expired chamber 110 still maintains 0.1 L of compensated volume. This Negative Restore Volume will trigger a reevaluation of PEEP in this circumstance to keep the device 100 functional, preventing possible alarm of the ventilator, which would not deliver further breaths and cause stoppage of the device 100.
(5) Ignore Threshold: A value being a configurable percentage of the Volume Limit at which volume compensation is no longer considered. This prevents the system 101 from evaluating and compensating for PEEP when approaching the Volume Limit. This prevents the slowed movement of the piston 112 at the high-volume end of the NLC curve from being falsely detected as a change in PEEP and being compensated as such.
(6) Compensation Sensitivity: The amount the detected PEEP must change for the compensation to be reapplied. This defines hysteresis, or a threshold to be exceeded between the previous volume compensation changes and the corresponding change in detected PEEP.

In the example shown at FIG. 21, Volume Limit is set to 0.8 L, Volume Limit Knee Percentage is set to 75%, Knee Compensation Vertical Slope is set to the reciprocal of a large number to approximate the shown slope, and Negative Restore Volume is set to zero or near-zero volume. Accordingly, the NLC curve begins to flatten at 0.6 L, applying the following equation: $\begin{matrix}PEEP Volume Limit Knee Percentage ∗ Volume Limit = Volume Limit Knee \\ 0.75 ∗ 0.8 L = 0.6 L\end{matrix}$ (3) Taking these parameters and the NLC curve shown at FIG. 21 into consideration, as pressure increases: between 0 and 15 cmH2O, volume will be cancelled out and the piston 112 would not move; above 15 cmH2O, the volume will follow the NLC curve; at pressures such that the volume exceeds 0.6 L, the piston 112 will slow to follow the NLC curve above the Volume Limit Knee; at sufficiently high pressures, the slope of the change in volume will approximate the Knee Compensation Vertical Slope.

The most notable advantage of this second method of **PEEP** compensation is the ability to compensate for Auto **PEEP,** as previously described. Another significant advantage is better control of behavior near the endpoints of volume. Because this method is being applied to a mechanical system, the NLC curve can be defined in such a way that as the volume approaches a mechanical limit, the NLC curve can reach a soft stop by altering the slope of the curve, flattening the curve to a horizontal line. This gradual change in the NLC curve prevents sudden acceleration/deceleration of the piston which can disrupt the simulated breaths and put more demand on the power supply. The flexibility of modifying the NLC curve allows for the above-described values to be manipulated in the field, catering to the specific dimensions of the piston in use. The response of the servo lung model and manikin to pressure changes during a positive pressure ventilation breath will be preserved to retain the same, or a substantially similar, response it would render without the compensation algorithm in place.

Since many modifications, variations and changes in detail can be made to the described embodiments of the device 100 and system 101 herein, it is intended that all matters in the foregoing description and shown in the accompanying drawings be interpreted as illustrative and not in a limiting sense. Thus, the scope of the invention should be determined by the appended claims and their legal equivalents.

### REFERENCE NUMBERS

- 1: Cylinder (prior art)
- 2: Piston (prior art)
- 3: Ball nut (prior art)
- 4: Ball screw (prior art)
- 100: Device
- 101: Volume compensation system
- 102: Air intake
- 104: Longitudinal axis
- 110: Chamber
- 112: Piston
- 114: Stability rod
- 116: Lead screw
- 120: First nut half
- 121: Flange
- 122: Piston sealing ring
- 124: O-ring seal
- 126: Insertion portion of the first nut half
- 127: Alignment feature of the insertion portion
- 130: Second nut half
- 132: Spring
- 134: Lockring
- 136: Internal receiver of the second nut half
- 137: Alignment feature of the internal receiver
- 140: Motor
- 150: Seal cover
- 152: Formed seal
- 153: Formed seal contour
- 154: Energized spring
- 155: Jacket

## Claims

1. A lung simulation device comprising:
a. a selectively sealed chamber (110) having an air intake (102) at a first end thereof and a motor (140) at a second end thereof, said chamber (110) having a longitudinal axis (104) extending from said first end to said second end;
b. a threaded member (116) extending through said chamber (110) being attached to and selectively rotatable by said motor (140);
c. a piston (112) slidably and sealingly affixed within said chamber (110) defining a central bore therethrough axially receiving said threaded member (116);
d. a first traveler (120) threadably connected to and translatable along said threaded member (116) having:
i. an insertion portion (126) sized to fit within said central bore; and
i. a flange (121) selectively affixed to said piston (112);
e. a second traveler (130) threadably connected to and translatable along said threaded member (116), said second traveler (130) defining an internal receiver (136) sized to accommodate said insertion portion (126);
f. said first traveler (120), said second traveler (130) and said piston (112) assembled such that said insertion portion (126) is passed through said central bore and inserted within said internal receiver (136) along said threaded member (116);
g. a biasing member (132) extending between said piston (112) and said second traveler (130); and
wherein said first traveler (120), said second traveler (130) and said piston (112) are displaced along said threaded member (116) as a unit.

2. The device of claim 1, further comprising
a. said piston (112) being configured to seal against said chamber (110) at a perimeter of said piston (112); and
b. each of said insertion portion (126) and said internal receiver (136) being configured to seal against the other of said insertion portion (126) and said internal receiver (136);
wherein a functionally airtight seal is formed between said chamber (110) and said piston (112), said first traveler (120), and said second traveler (130); and
wherein said functionally airtight seal forms a pressurized compartment between said piston (112) and said first end of said chamber (110).

3. The device of claim 2, further comprising an O-ring (124) on said insertion portion (126) of said first traveler (120), sized to contact both of said insertion portion (126) and said internal receiver (136) when assembled, forming a seal therebetween.

4. The device of claim 2, wherein said insertion portion (126) is sized to closely correspond to said internal receiver (136) when said insertion portion (126) and said internal receiver (136) are assembled, forming a seal therebetween.

5. The device of claim 4, wherein grease is added to said insertion portion (126), said internal receiver (136), internal threads of said first traveler (120), and internal threads of said second traveler (130).

6. The device of claim 2, wherein a seal cover (150) is affixed to said flange (121), securing a formed seal (152) against said flange (121), and wherein said formed seal (152) has an internal shape contoured to a profile of said threaded member (116).

7. The device of claim 6, further comprising an energized spring (154) and a jacket (155), said jacket (155) being disposed about an outer perimeter of said formed seal (152) and containing said energized spring (154), wherein said energized spring (154) is configured to compress said formed seal (152) against said threaded member (116) when assembled.

8. The device of claim 1, wherein each of said insertion portion (126) and said internal receiver (136) have at least one alignment member (127, 137), and said at least one alignment member (127, 137) on one of said insertion portion (126) and said internal receiver (136) is at least one protrusion (127, 137) and said at least one alignment member on the other of said insertion portion (126) and said internal receiver (136) is at least one groove (127, 137), and said at least one protrusion (127, 137) is retained in said at least one groove (127, 137) when said insertion portion (126) and said internal receiver (136) are assembled.

9. A volume compensation system comprising:
a. the device (100) of claim 1;
b. at least one air pressure sensor proximate to at least one of said air intake (102), a pressurized compartment of said chamber (110), and tubing attached to said air intake (102); and
c. a controller configured to read pressure measurements from said at least one air pressure sensor, to read volume measurements of said pressurized compartment, and to instruct actuation of said motor (140), translating said piston (112) along said threaded member (116).

10. The system of claim 9, further comprising:
a. a buffer memory configured to store at least one of: one or more of said pressure measurements and one or more of said volume measurements;
b. a means for detecting breath phase of one of said device and an external breathing simulator, said breath phase being one of inspiration and expiration;
c. a means for determining retained volume of air within said pressurized compartment of said chamber (110) following expiration, based on at least one of: said pressure measurements and said volume measurements; and
wherein said controller, over a configurable number of breath phases, translates said piston (112) to expel said retained volume from said chamber (110) during expiration.

11. The system of claim 9, further comprising:
a. a plurality of said devices (100) configured to be operated by said controller;
b. a plurality of buffer memories each configured to store, from different ones of said plurality of said devices (100), at least one of: one or more of said pressure measurements and one or more of said volume measurements;
c. a means for mapping the relationship between pressure and volume of said plurality of devices (100) on a non-linear curve, based on at least one of: said pressure measurements and said volume measurements; and
wherein said means for mapping communicates with said controller to effectively shift said non-linear curve to model zero volume within said pressurized compartment at non-zero pressure;
wherein said non-linear curve is based on:
i. a volume limit corresponding to the maximum volume of said pressurized chamber (110); and
ii. a volume limit knee percentage corresponding to a change in said non-linear curve approaching said volume limit to gradually decrease the slope of said non-linear curve to zero as said non-linear curve approaches said volume limit; and
wherein said controller is configured to prevent the device (100) from expelling more volume from said pressurized compartment than is contained in said pressurized compartment at a point of time.

12. A method of using the device of claim 2 comprising:
a. actuating said motor (140) to selectively rotate said threaded member (116) about said longitudinal axis (104) in a first direction;
b. translating said piston (112) along said longitudinal axis (104) by said threaded member (116) toward said second end, expanding said pressurized compartment and pulling air into said air intake (102);
c. actuating said motor (140) to halt rotation of said threaded member (116) when said piston (112) translates to a predetermined destination point;
d. actuating said motor (140) to selectively rotate said threaded member (116) about said longitudinal axis (104) in a second direction, opposite said first direction;
e. translating said piston (112) along said longitudinal axis (104) toward said first end, contracting said pressurized compartment and expelling air from said air intake (102); and
f. actuating said motor (140) to halt rotation of said threaded member (116) when said piston (112) translates to a predetermined destination point.

13. The method of claim 12, further comprising attaching a ventilator to said air intake (102), wherein tubing of the ventilator is in fluid communication with said pressurized compartment.

14. The method of claim 13, further comprising applying the volume compensation system (101) of claim 9.

15. The method of claim 13, further comprising applying the volume compensation system (101) of claim 10.

16. The method of claim 13, further comprising applying the volume compensation system (101) of claim 11.

## Patentansprüche

1. Lungensimulationsgerät, das Folgendes umfasst:
a. eine selektiv verschließbare Kammer (110) mit einem Lufteinlass (102) an einem ersten Ende davon und einem Motor (140) an einem zweiten Ende davon, wobei die genannte Kammer (110) eine Längsachse (104) aufweist, die sich von dem genannten ersten Ende zu dem genannten zweiten Ende erstreckt;
b. ein Gewindeelement (116), das sich durch die genannte Kammer (110) erstreckt und an dem genannten Motor (140) befestigt ist und von diesem selektiv gedreht werden kann;
c. einen Kolben (112), der verschiebbar und dichtend in der genannten Kammer (110) befestigt ist und eine zentrale Bohrung definiert, durch die das genannte Gewindeelement (116) axial aufgenommen wird;
d. einen ersten Läufer (120), der mit dem genannten Gewindeelement (116) verschraubt und entlang diesem verschiebbar ist und Folgendes aufweist:
i. einen Einführungsabschnitt (126), so bemessen, dass er in die genannte zentrale Bohrung passt; und
i. einen Flansch (121), der selektiv an dem genannten Kolben (112) befestigt ist;
e. einen zweiten Läufer (130), der mit dem genannten Gewindeelement (116) verschraubt und entlang diesem verschiebbar ist, wobei der genannte zweite Läufer (130) eine innere Aufnahme (136) definiert, die zum Aufnehmen des Einführungsabschnitts (126) bemessen ist;
f. wobei der genannte erste Läufer (120), der genannte zweite Läufer (130) und der genannte Kolben (112) so zusammengebaut sind, dass der genannte Einführungsabschnitt (126) durch die genannte zentrale Bohrung geführt und entlang des genannten Gewindeelements (116) in die genannte innere Aufnahme (136) eingeführt wird;
g. ein Vorspannelement (132), das sich zwischen dem genannten Kolben (112) und dem genannten zweiten Läufer (130) erstreckt; und
wobei der genannte erste Läufer (120), der genannte zweite Läufer (130) und der genannte Kolben (112) als eine Einheit entlang des genannten Gewindeelements (116) verschoben werden.

2. Gerät nach Anspruch 1, das ferner Folgendes umfasst:
a. den genannte Kolben (112) konfiguriert zum Abdichten gegenüber der genannten Kammer (110) an einem Umfang des genannten Kolbens (112); und
b. wobei sowohl der genannte Einführungsabschnitt (126) als auch die genannte innere Aufnahme (136) zum Abdichten gegenüber dem jeweils anderen von dem genannten Einführungsabschnitt (126) und der genannten inneren Aufnahme (136) konfiguriert sind;
wobei eine funktional luftdichte Abdichtung zwischen der genannten Kammer (110) und dem genannten Kolben (112), dem genannten ersten Läufer (120) und dem genannten zweiten Läufer (130) gebildet wird; und
wobei die genannte funktional luftdichte Abdichtung einen Druckraum zwischen dem genannten Kolben (112) und dem genannten ersten Ende der genannten Kammer (110) bildet.

3. Gerät nach Anspruch 2, das ferner einen O-Ring (124) an dem genannten Einführungsabschnitt (126) des genannten ersten Läufers (120) umfasst, der im zusammengebauten Zustand zum Berühren sowohl des genannten Einführungsabschnitts (126) als auch der genannnten inneren Aufnahme (136) bemessen ist, um eine Dichtung dazwischen zu bilden.

4. Gerät nach Anspruch 2, wobei der genannte Einführungsabschnitt (126) so bemessen ist, dass er im zusammengebauten Zustand des genannten Einführungsabschnitts (126) und der genannten inneren Aufnahm (136) eng dem genannten inneren Aufnahmeraum (136) entspricht und eine Dichtung dazwischen bildet.

5. Gerät nach Anspruch 4, wobei Fett dem Einführungsabschnitt (126), der genannten inneren Aufnahme (136), dem Innengewinde des genannten ersten Läufers (120) und dem Innengewinde des genannten zweiten Läufers (130) zugegeben wird.

6. Gerät nach Anspruch 2, wobei eine Dichtungsabdeckung (150) an dem genannten Flansch (121) befestigt ist, um eine geformte Dichtung (152) gegenüber dem Flansch (121) zu sichern, und wobei die genannte geformte Dichtung (152) eine Innenform aufweist, die an ein Profil des genannten Gewindeelements (116) konturiert ist.

7. Gerät nach Anspruch 6, das ferner eine vorgespannte Feder (154) und einen Mantel (155) umfasst, wobei der genannte Mantel (155) um einen Außenumfang der genannten geformten Dichtung (152) angeordnet ist und die genannte vorgespannte Feder (154) enthält, wobei die genannte vorgespannte Feder (154) zum Drücken der genannten geformten Dichtung (152) im zusammengebauten Zustand gegen das genannte Gewindeelement (116) konfiguriert ist.

8. Gerät nach Anspruch 1, wobei sowohl der genannte Einführungsabschnitt (126) als auch die genannte innere Aufnahme (136) jeweils mindestens ein Ausrichtungselement (127, 137) aufweisen, und das genannte mindestens eine Ausrichtungselement (127, 137) an dem genannten Einführungsabschnitt (126) oder der genannten inneren Aufnahme (136) mindestens ein Vorsprung (127, 137) ist und das genannte mindestens eine Ausrichtungselement an dem jeweils anderen von dem genannten Einführungsabschnitt (126) und der genannten inneren Aufnahme (136) mindestens eine Nut (127, 137) ist, und der genannte mindestens eine Vorsprung (127, 137) in der genannten mindestens einen Nut (127, 137) gehalten wird, wenn der genannte Einführungsabschnitt (126) und die genannte innere Aufnahme (136) zusammengebaut sind.

9. Volumenausgleichssystem, das Folgendes umfasst:
a. das Gerät (100) nach Anspruch 1;
b. mindestens einen Luftdrucksensor in der Nähe von mindestens einem von dem genannten Lufteinlass (102), einem Druckraum der genannten Kammer (110) und einer an den genannten Lufteinlass (102) angeschlossenen Leitung; und
c. eine Steuereinheit, konfiguriert zum Auslesen von Druckmesswerten von dem genannten mindestens einen Luftdrucksensor, zum Auslesen von Volumenmesswerten der genannten Druckkammer und zum Anweisen der Betätigung des genannten Motors (140), wodurch der genannte Kolben (112) entlang des genannten Gewindeelements (116) verschoben wird.

10. System nach Anspruch 9, das ferner Folgendes umfasst:
a. einen Pufferspeicher, konfiguriert zum Speichern von mindestens einem von: einem oder mehreren der Druckmesswerte und einem oder mehreren der genannten Volumenmesswerte;
b. ein Mittel zum Erkennen der Atemphase entweder des genannten Geräts oder eines externen Atemsimulators, wobei die genannte Atemphase entweder Einatmen oder Ausatmen ist;
c. ein Mittel zum Bestimmen des in dem genannten Druckraum der genannten Kammer (110) nach dem Ausatmen zurückgehaltenen Luftvolumens auf der Basis der genannten Druckmesswerte und/oder der genannten Volumenmesswerte; und
wobei die genannte Steuerung über eine konfigurierbare Anzahl von Atemphasen den genannten Kolben (112) verschiebt, um das genannte zurückgehaltene Volumen während des Ausatmens aus der genannten Kammer (110) auszustoßen.

11. System nach Anspruch 9, das ferner Folgendes umfasst:
a. mehrere der genannten Geräte (100), die zum Betreiben durch die genannte Steuerung konfiguriert sind;
b. mehrere Pufferspeicher, jeweils konfiguriert zum Speichern, von verschiedenen aus der genannten Mehrzahl der genannten Geräte (100), von mindestens einem von: einem oder mehreren der genannten Druckmesswerte und einem oder mehreren der genannten Volumenmesswerte;
c. ein Mittel zum Abbilden der Beziehung zwischen Druck und Volumen der genannten Mehrzahl von Geräten (100) auf eine nichtlineare Kurve mindestens auf der Basis der genannten Druckmesswerte und/oder der genannten Volumenmesswerte; und
wobei das genannte Abbildungsmittel mit der genannten Steuerung kommuniziert, um die genannte nichtlineare Kurve effektiv zu verschieben, um ein Volumen von Null innerhalb des genannten Druckraums bei einem Druck ungleich Null zu modellieren;
wobei die genannte nichtlineare Kurve basiert auf:
i. einer Volumengrenze, die dem maximalen Volumen der genannten Druckkammer (110) entspricht; und
ii. einem Volumengrenzen-Knieprozentsatz entsprechend einer Änderung der genannten nichtlinearen Kurve, die sich der genannten Volumengrenze nähert, um die Steigung der genannten nichtlinearen Kurve allmählich auf Null zu verringern, wenn sich die genannte nichtlineare Kurve der genannten Volumengrenze nähert; und
wobei die genannte Steuerung so konfiguriert ist, dass sie verhindert, dass das Gerät (100) mehr Volumen aus dem genannten Druckraum ausstößt, als zu einem bestimmten Zeitpunkt in dem genannten Druckraum enthalten ist.

12. Verfahren zur Verwendung des Geräts nach Anspruch 2, das Folgendes beinhaltet:
a. Betätigen des genannten Motors (140), um das Gewindeelement (116) selektiv um die genannte Längsachse (104) in einer ersten Richtung zu drehen;
b. Verschieben des genannten Kolbens (112) entlang der genannten Längsachse (104) durch das genannte Gewindeelement (116) in Richtung des genannten zweiten Endes, wodurch die genannte Druckkammer ausgedehnt und Luft in den genannten Lufteinlass (102) gesaugt wird;
c. Betätigen des genannten Motors (140), um die Drehung des genannten Gewindeelements (116) anzuhalten, wenn sich der genannte Kolben (112) zu einem vorbestimmten Zielpunkt verschiebt;
d. Betätigen des genannten Motors (140), um das genannte Gewindeelement (116) selektiv um die genannte Längsachse (104) in einer zweiten Richtung, entgegengesetzt zur ersten Richtung, zu drehen;
e. Verschieben des genannten Kolbens (112) entlang der genannten Längsachse (104) in Richtung des genannten ersten Endes, wodurch die genannte Druckkammer zusammengezogen und Luft aus dem genannten Lufteinlass (102) ausgestoßen wird; und
f. Betätigen des genannten Motors (140), um die Drehung des genannten Gewindeelements (116) anzuhalten, wenn der genannte Kolben (112) zu einem vorbestimmten Zielpunkt verschoben wird.

13. Verfahren nach Anspruch 12, das ferner das Anbringen eines Beatmungsgeräts an dem genannten Lufteinlass (102) beinhaltet, wobei ein Schlauch des Beatmungsgeräts in Fluidverbindung mit dem genannten Druckraum steht.

14. Verfahren nach Anspruch 13, das ferner das Anwenden des Volumenausgleichssystems (101) nach Anspruch 9 beinhaltet.

15. Verfahren nach Anspruch 13, das ferner das Anwenden des Volumenausgleichssystems (101) nach Anspruch 10 beinhaltet.

16. Verfahren nach Anspruch 13, das ferner das Anwenden des Volumenausgleichssystems (101) nach Anspruch 11 beinhaltet.

## Revendications

1. Dispositif de simulation pulmonaire comprenant :
a. une enceinte scellée sélectivement (110) ayant un admission d'air (102) à une première extrémité de celle-ci et un moteur (140) à une deuxième extrémité de celle-ci, ladite enceinte (110) ayant un axe longitudinal (104) s'étendant de la ladite première extrémité à ladite deuxième extrémité ;
b. un élément fileté (116) s'étendant à travers ladite enceinte (110) étant attaché au et étant sélectivement rotatif par ledit moteur (140) ;
c. un piston (112) fixé de manière coulissante et étanche dans ladite enceinte (110) définissant un alésage central à travers celle-ci recevant ledit élément fileté (116) ;
d. un premier écrou coulissant (120) raccordé par filetage au et déplaçable le long dudit élément fileté (116) ayant :
i. une partie d'insertion (126) dimensionnée pour s'adapter dans l'alésage central ; et
i. une bride (121) fixée sélectivement audit piston (112) ;
e. un deuxième écrou coulissant (130) raccordé par filetage au et déplaçable le long dudit élément fileté (116), ledit deuxième écrou coulissant (130) définissant un logement interne (136) dimensionné pour loger ladite partie d'insertion (126) ;
f. ledit premier écrou coulissant (120), ledit deuxième écrou coulissant (130) et ledit piston (112) étant assemblés de sorte que ladite partie d'insertion (126) est passée à travers ledit alésage central et insérée dans ledit logement interne (136) le long dudit élément fileté (116) ;
g. un élément de sollicitation (132) s'étendant entre ledit piston (112) et ledit deuxième écrou coulissant (130) ; et
dans lequel ledit premier écrou coulissant (120), ledit deuxième écrou coulissant (130) et ledit piston (112) sont déplacés le long dudit élément fileté (116) comme une unité.

2. Dispositif selon la revendication 1, comprenant en outre :
a. ledit piston (112) étant configuré pour se sceller contre ladite enceinte (110) à un périmètre dudit piston (112) ; et
b. chacun d'entre ladite partie d'insertion (126) et dudit logement interne (136) étant configuré pour se sceller contre l'autre de ladite partie d'insertion (126) et dudit logement interne (136) ;
dans lequel un joint fonctionnellement étanche à l'air est formé entre ladite enceinte (110) et ledit piston (112), ledit premier écrou coulissant (120) et ledit deuxième écrou coulissant (130) ; et
dans lequel ledit joint fonctionnellement étanche à l'air forme un compartiment pressurisé entre ledit piston (112) et ladite première extrémité de ladite enceinte (110).

3. Dispositif selon la revendication 2, comprenant en outre un joint torique (124) sur ladite partie d'insertion (126) dudit premier écrou coulissant (120), dimensionné pour entrer en contact avec ladite partie d'insertion (126) et ledit logement interne (136), lorsque assemblés, formant un joint d'étanchéité entre eux.

4. Dispositif selon la revendication 2, dans lequel ladite partie d'insertion (126) est dimensionnée pour correspondre étroitement audit logement interne (136) lorsque ladite partie d'insertion (126) et ledit logement interne (136) sont assemblés, formant un joint d'étanchéité entre eux.

5. Dispositif selon la revendication 4, dans lequel de la graisse est ajoutée à ladite partie d'insertion (126), audit logement interne (136), auxdits filets internes dudit premier écrou coulissant (120) et aux filets internes dudit deuxième écrou coulissant (130).

6. Dispositif selon la revendication 2, dans lequel un couvre-joint (150) est fixé à ladite bride (121), fixant un joint d'étanchéité formé (152) contre ladite bride (121), et dans lequel ledit joint d'étanchéité formé (152) a une forme interne épousant le contour d'un profil dudit élément fileté (116).

7. Dispositif selon la revendication 6, comprenant en outre un ressort préchargé (154) et une gaine (155), ladite gaine (155) étant disposée autour d'un périmètre externe dudit joint d'étanchéité formé (152) et contenant ledit ressort préchargé (154), dans lequel ledit ressort préchargé (154) est configuré pour comprimer ledit joint d'étanchéité formé (152) contre ledit élément fileté (116) lorsque assemblés.

8. Dispositif selon la revendication 1, dans lequel chacun d'entre ladite partie d'insertion (126) et ledit logement interne (136) a au moins un élément d'alignement (127, 137), et ledit au moins un élément d'alignement (127, 137) sur l'un de ladite partie d'insertion (126) et dudit logement interne (136) est au moins une saillie (127, 137) et ledit au moins un élément d'alignement sur l'autre de ladite partie d'insertion (126) et dudit logement interne (136) est au moins une rainure (127, 137), et ladite au moins une saillie (127, 137) est retenue dans ladite au moins une rainure (127, 137) lorsque ladite partie d'insertion (126) et ledit logement interne (136) sont assemblés.

9. Système de compensation de volume comprenant :
a. le dispositif (100) selon la revendication 1 ;
b. au moins un capteur de pression d'air proche d'au moins l'un d'entre ladite admission d'air (102), un compartiment pressurisé de ladite enceinte (110) et un tube attaché à ladite admission d'air (102) ; et
c. un contrôleur configuré pour lire des mesures de pression dudit au moins un capteur de pression d'air, lire des mesures de volume dudit compartiment pressurisé, et donner l'instruction d'actionner ledit moteur (140), déplaçant ledit piston (112) le long dudit élément fileté (116).

10. Système selon la revendication 9, comprenant en outre :
a. une mémoire tampon configurée pour stocker au moins l'une d'entre : une ou plusieurs desdites mesures de pression et une ou plusieurs desdites mesures de volume ;
b. un moyen de détection de phase de respiration de l'un dudit dispositif et d'un simulateur de respiration externe, ladite phase de respiration étant l'une d'inspiration et d'expiration ;
c. un moyen de détermination de volume d'air retenu dans ledit compartiment pressurisé de ladite enceinte (110) suite à l'expiration, sur la base d'au moins l'une desdites mesures de pression et desdites mesures de volume ; et
dans lequel ledit contrôleur, au cours d'un nombre configurable de phases de respiration, déplace ledit piston (112) pour expulser ledit volume retenu dans ladite enceinte (110) pendant l'expiration.

11. Système selon la revendication 9, comprenant en outre :
a. une pluralité desdits dispositifs (100) configurés pour que ledit contrôleur les fasse fonctionner ;
b. une pluralité de mémoires tampons configurées chacune pour stocker, de dispositifs différents parmi ladite pluralité desdits dispositifs (100), au moins l'une d'entre : une ou plusieurs desdites mesures de pression et une ou plusieurs desdites mesures de volume ;
c. un moyen pour mapper la relation entre la pression et le volume de ladite pluralité de dispositifs (100) sur une courbe non linéaire, sur la base d'au moins l'une d'entre :
lesdites mesures de pression et lesdites mesures de volume ; et
dans lequel ledit moyen de mappage communique avec ledit contrôleur pour décaler ladite courbe non linéaire afin de modéliser un volume nul dans ledit compartiment pressurisé à une pression non nulle ;
dans lequel la courbe non linéaire est basée sur :
i. une limite de volume correspondant au volume maximal de ladite enceinte pressurisée (110) ; et
ii. un pourcentage du point d'inflexion de limite de volume correspondant à un changement dans ladite courbe non linéaire s'approchant de ladite limite de volume afin de diminuer graduellement la pente de ladite courbe non linéaire à zéro au fur et à mesure que la courbe non linéaire s'approche de ladite limite de volume ; et
dans lequel ledit contrôleur est configuré pour empêcher le dispositif (100) d'expulser plus de volume dudit compartiment pressurisé que ledit compartiment pressurisé n'en contient à un point dans le temps.

12. Procédé d'utilisation du dispositif selon la revendication 2, comprenant :
a. actionner ledit moteur (140) pour faire tourner sélectivement ledit élément fileté (116) autour de l'axe longitudinal (104) dans une première direction ;
b. déplacer ledit piston (112) le long dudit axe longitudinal (104) par ledit élément fileté (116) vers ladite deuxième extrémité, dilater ledit compartiment pressurisé et tirer de l'air dans ladite admission d'air (102) ;
c. actionner ledit moteur (140) pour arrêter la rotation dudit élément fileté (116) lorsque ledit piston (112) se déplace à un point de destination prédéterminé ;
d. actionner ledit moteur (140) pour faire tourner sélectivement ledit élément fileté (116) autour dudit axe longitudinal (104) dans une deuxième direction, à l'opposé de la première direction ;
e. déplacer ledit piston (112) le long dudit axe longitudinal (104) vers ladite première extrémité, contractant ledit compartiment pressurisé et expulsant l'air de l'admission d'air (102) ; et
f. actionner ledit moteur (140) pour arrêter la rotation dudit élément fileté (116) lorsque ledit piston (112) se déplace à un point de destination prédéterminé.

13. Procédé selon la revendication 12, comprenant en outre attacher un ventilateur à ladite admission d'air (102), dans lequel le tube du ventilateur est en communication fluidique avec ledit compartiment pressurisé.

14. Procédé selon la revendication 13, comprenant en outre appliquer le système de compensation de volume (101) selon la revendication 9.

15. Procédé selon la revendication 13, comprenant en outre appliquer le système de compensation de volume (101) selon la revendication 10.

16. Procédé selon la revendication 13, comprenant en outre appliquer le système de compensation de volume (101) selon la revendication 11.
